(19) Europäisches Patentamt
European Patent Office
Office européen des brevets

(11) EP 0 591 643 B1

(12) EUROPÄISCHE PATENTSCHRIFT

(45) Veröffentlichungstag und Bekanntmachung des Hinweises auf die Patenterteilung:
03.03.1999 Patentblatt 1999/09

(51) Int Cl.⁶: **H04H 1/00**

(21) Anmeldenummer: 93112728.6

(22) Anmeldetag: 09.08.1993

(54) **Digitales-Rundfunk-Sendernetz-System**

Digital broadcast system with a transmitter network

Système de radiodiffusion numérique comportant un réseau d'émetteurs

(84) Benannte Vertragsstaaten:
AT BE CH DE DK ES FR GB GR IT LI NL PT SE

(30) Priorität: 21.09.1992 DE 4231536
03.03.1993 DE 4306590

(43) Veröffentlichungstag der Anmeldung:
13.04.1994 Patentblatt 1994/15

(73) Patentinhaber: Rohde & Schwarz GmbH & Co. KG
D-81671 München (DE)

(72) Erfinder: Dambacher, Paul, Dipl.-Ing. FH
D-84539 Ampfing (DE)

(74) Vertreter: Graf, Walter, Dipl.-Ing.
Patentanwalt,
Sonnenstrasse 33
80331 München (DE)

(56) Entgegenhaltungen:
EP-A- 0 295 620          EP-A- 0 313 491

• 17 TH INTERNATIONAL TELEVISION SYMPOSIUM AND TECHNICAL EXHIBITION 13. Juni 1991 , MONTREUX, CH Seiten 867 - 883 P. DAMBACHER 'The way to DAB via Digital Satellite Radio'
• 17 TH. INTERNATIONAL TELEVISION SYMPOSIUM AND TECHNICAL EXHIBITION 13. Juni 1991 , MONTREUX, CH Seiten 612 - 617 Y.F. DEHERY, G. STOLL, L. VAN DE KERKHOF 'Musicam source coding for digital sound.'

**Beschreibung**

Für die Versorgung einzelner Landesteile mit mehreren Hörfunkprogrammen wurde das sogenannte DAB-Hörfunk-System (Digital-Audio-Broadcasting, beschrieben in ITU COM' 89, Genf, Oktober 1989 bzw. in "Künftige Systeme der digitalen Hörfunkübertragung", Bayerischer Rundfunk, November 1990). Bei diesem DAB-System ist eine Vielzahl von einzelnen Gleichwellensendern vorgesehen, von denen jeder in einem sogenannten COFDM-Signalpaket (Coded-Orthogonal-Frequency-Division and Multiplexing) jeweils sechs digitale Stereo-tonsignale bitsynchron aussendet. Nach dem COFDM-Prinzip wird dabei der digitale Datenstrom des Stereosignals vor der Aussendung in viele Teilsignale aufgespalten, von denen jedes auf einem einzelnen Träger getrennt übertragen wird. Im Empfänger werden diese Teilinformationen wieder zu einer Gesamtinformation des digitalen Stereosignals zusammengefaßt. Ein weiteres Charakteristikum dieses DAB-Systems ist, daß die zu übertragenden Stereosignale vor der COFDM-Aufbereitung in ihrer Datenmenge nach einem die psychoakustischen Phänomene des menschlichen Ohres ausnützenden Verfahren (MUSICAM = Masking Universal Subband Integrated Coding and Multiplexing, beschrieben in "An Universal Subband Coding System Description", CCETT, IRT, Matsushita und Philips bzw. 17th. International Television Symposium and Technical Exhibition 13. Juni 1991, Montreux, CH, Seiten 612-617, Y.F. Dehery, G. Stoll, L. van de Kerkhof, 'Musicam source coding for digital sound', Seite 613, Spalte 1, Zeile 1 - Seite 614, Spalte 2, Zeile 18) entsprechend datenreduziert wird.

Dieses für den Hörfunk entwickelte DAB-System hat extrem gute Übertragungseigenschaften, es löst vor allem das Problem der Verzerrungen der Funksignale bei derartigen Gleichwellennetzen durch unterschiedlich lange Übertragungswege und die dadurch zu befürchtenden Störungen.

Es ist Aufgabe der Erfindung, dieses hochentwickelte DAB-Sendernetz-System auch zur Abstrahlung einer größeren Datenmenge als sie den erwähnten sechs digitalen Stereo-Tonsignalen entspricht, geeignet zu machen und gleichzeitig auch ein einfaches System zur Zuführung dieser größeren Datenmenge zu den einzelnen Sendestationen des Sendernetzes aufzuzeigen.

Diese Aufgabe wird ausgehend von einem System laut Oberbegriff des Hauptanspruches durch dessen kennzeichnende Merkmale gelöst. Vorteilhafte Weiterbildungen, insbesondere auch bezüglich der einfachen Zufuhr dieser größeren Datenmenge zu den einzelnen Sendestationen ergeben sich aus den Unteransprüchen.

Bei dem erfindungsgemäßen System ist es möglich, eine größere Datenmenge durch den entsprechend breitbandigen Sender der einzelnen Sendestationen zu den Konsumer-Empfängern zu übertragen, so daß entweder pro Sendestation mehr als sechs Programme gleichzeitig ausgestrahlt werden können oder beispielsweise sogar ein Fernsehsignal bis zu HDTV-Qualität, indem die Datenmenge dieser Fernsehsignale nach entsprechender Datenreduktion gemäß psychooptischen Modellen entweder auf mehrere Signalpakete aufgeteilt wird oder eine der mit Hilfe von handelsüblichen COFDM-Codern mit 4PSK-Modulatoren erzeugte Modulationsart höherer Ordnung (8PSK/2AM bzw. 16QAM oder 64QAM) angewendet wird, in beiden Fällen ist es möglich, eine wesentlich größere Datenmenge als beim herkömmlichen DAB-Verfahren über die einzelnen Sendestationen auszustrahlen. Dazu ist es nur erforderlich, daß in den Konsumer-Empfängern entsprechende Umsetzer zur Zusammenfassung der die Gesamtdaten enthaltenden Signalpakete vorgesehen sind bzw. ein entsprechender Demodulator für die vorgesehene höhere PSK/QAM-Modulation benutzt wird. Die aufgezeigten beiden Maßnahmen nach Anspruch 1 bzw. Anspruch 2 können einzeln für sich oder vorzugsweise jedoch in Kombination angewendet werden, auf diese Weise ist nochmals eine Vervielfachung der zu übertragenden Datenmenge möglich.

Die Verwendung von zwischenzeitlich handelsüblichen 4PSK-COFDM-Coder/Modulatoren, wie sie für das DAB-System vorgesehen sind, zur Erzeugung der Modulationsarten höherer Ordnung gemäß Anspruch 2 ermöglicht eine besonders einfache und preiswerte Realisierung der angestrebten Erhöhung der zu übertragenden Datenmenge, da nur mehrere solche handelsüblichen 4PSK-Modulatoren über eine Addierstufe zusammengeschaltet werden müssen und kein neuer Modulator entwickelt werden muß. Es kann vielmehr auf Geräte zurückgegriffen werden, die für das DAB-Prinzip bereits entwickelt sind. Das erfindungsgemäße Prinzip nach Anspruch 2 kann hierbei für alle drei Moden 1, 2 und 3 der COFDM-Pakete, die jeweils mit unterschiedlich vielen Trägern arbeiten, benutzt werden. Im einfachsten Fall werden zwei handelsübliche 4PSK-COFDM-Coder/Modulatoren, deren Träger jeweils um 45° zueinander verdreht sind, unmittelbar in einer Addierstufe zusammengefaßt, so daß eine neuartige 8PSK/2AM-Modulation (Phase Shift Keying mit 8 Phasenlagen und zusätzlichen 2 Amplitudenstufen) entsteht. Eine andere Möglichkeit besteht nach den Unteransprüchen darin, mit solchen handelsüblichen Coder-Modulatoren eine 16QAM oder 64QAM-Modulation durchzuführen, auch dazu ist nur eine zusätzliche Addierstufe nötig.

Modulationsarten höherer Ordnung mit mehr als 4 Phasenlagen sind für Monoträger an sich bekannt (beispielsweise "Digitale Modulationsverfahren" Rudolf Mäusl, Hüthig Verlag, S. 234-244 bzw. EP-A-O 313 491 (Verdot, Georges), Spalte 1, Zeile 4 - Zeile 13; Ansprüche 1,3; Abbildungen 1,3, Spalte 2, Zeile 53 - Zeile 60, Spalte 4, Zeile 40 - Zeile 53, Spalte 1, Zeile 40 - Zeile 56; EP-A-O 295 620 /Nec Corporation), Spalte 1, Zeile 1 - Zeile 13; Ansprüche 1,4,5,7). Bei dem 8PSK-Modulationsverfahren (S. 234) wird im Gegensatz zu dem erfindungsgemäßen Merkmal nach Anspruch 2 die Amplitudenmodulation unterdrückt, die erfindungsgemäße 8PSK/2AM-Modulation ist demgegenüber neu, indem sie noch zusätzliche zwei Amplitudenstufen für die Datenübertragung ausnutzt. Die Verwendung der vorgeschlagenen neuartigen 8PSK/2AM-Modulation bzw. die Auswahl der an sich für Monoträger bekannten 16- bzw. 64 QAM-Modulation jeweils für die Modulation der Mehrfachträger des COFDM-Prinzips bringt den Vorteil mit sich, daß diese Modulationsarten mit üblichen 4-PSK-Modulatoren aufgebaut werden können. In allen drei ausgewählten Modulationsverfahren wird ein sehr vorteilhaftes Verhältnis von Trägerleistung zu Rauschen (C/N-Verhältnis) relativ zur Datenübertragungskapazität erreicht.

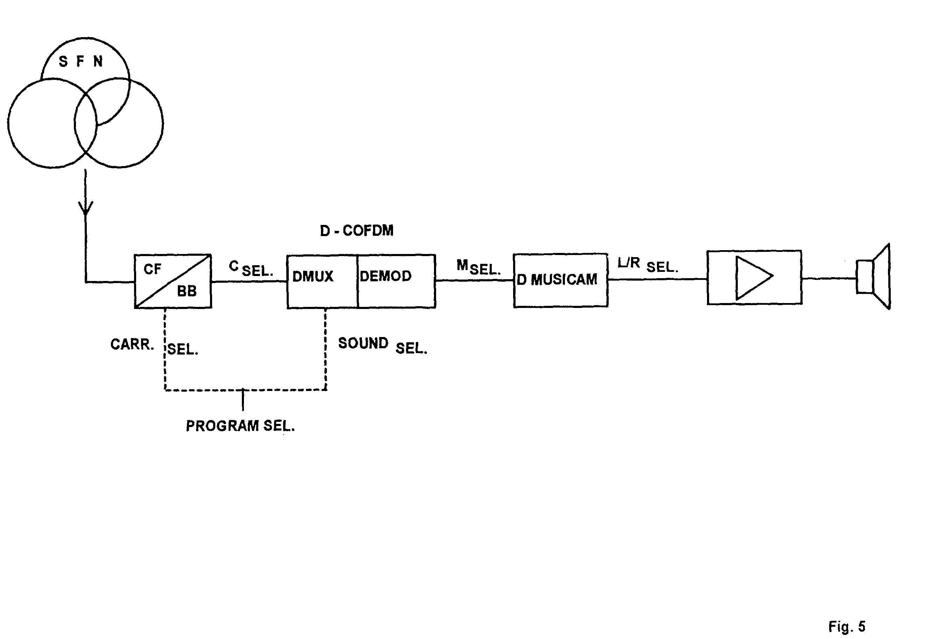

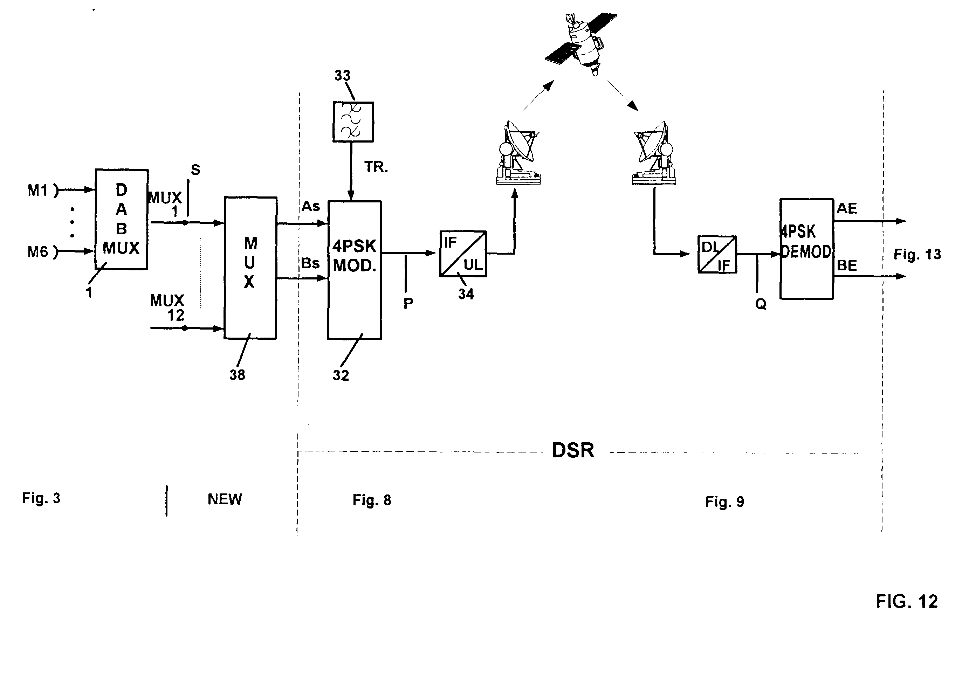

Für die Übertragung der größeren Datenmenge zu den einzelnen Sendestationen gibt es die verschiedensten Möglichkeiten, als besonders vorteilhaft hat es sich erwiesen, hierfür auf dem bekannten DSR-Satelliten-Übertragungs-System aufzubauen (siehe beispielsweise auch 17th International Television Symposium and Technical Exhibition 13, Juni 1991, Montreux, CH, Seiten 867-883, P. Dambacher 'The way to DAB via Digital Satellite Radio', Seite 868, Zeile 9 - Zeile 10; Abbildungen 5, 9; Seite 867, Zeile 24 - Zeile 28).

Das in den Unteransprüchen 11 bis 24 näher beschriebene System eines abgewandelten DSR-Satelliten-Übertragungs-Verfahrens, das zur Übertragung einer wesentlich höheren Datenmenge geeignet ist als dies bisher der Fall ist, kann nicht nur für die Speisung des erfindungsgemäßen DAB-Rundfunk-Sendernetzes laut Anspruch 1 oder 2 benutzt werden, sondern ist in gleicher Weise auch dazu geeignet, im Zusammenhang mit dem herkömmlichen DAB-Verfahren benutzt zu werden. Es wird dadurch möglich, beispielsweise nicht nur vier COFDM-Pakete mit jeweils sechs Tonprogrammen zu den einzelnen Gleichwellensendern des DAB-Netzes zu übertragen, sondern beispielsweise doppelt soviel COFDM-Pakete. Damit stehen an den einzelnen Sendern des DAB-Netzes mehr COFDM-Pakete zur Auswahl zur Verfügung, von denen dann nach dem herkömmlichen DAB-Prinzip allerdings nur ein Paket mit jeweils sechs Programmen ausgestrahlt wird. Dieses verbesserte DSR-Satelliten-Übertragungssystem nach den Unteransprüchen 9 bis 22 ist daher in seiner Anwendung nicht auf den Anspruch 1 oder 2 beschränkt.

Die Erfindung wird im folgenden anhand schematischer Zeichnungen an Ausführungsbeispielen näher erläutert.

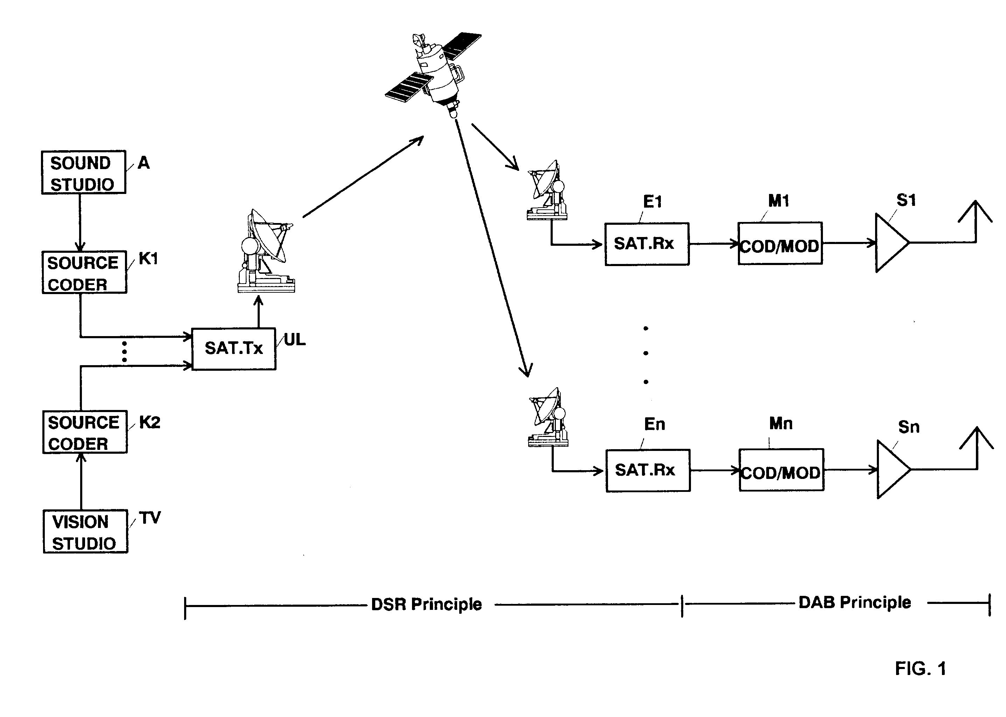

Fig. 1 zeigt das Prinzipschaltbild eines erfindungsgemäß abgewandelten DAB-Rundfunk-Sendernetzes. Das Gleichwellen-Sendernetz besteht aus mehreren Sendern S1 bis Sn, denen die abzustrahlenden Programme über eine Satelliten-Übertragungsstrecke SAT zugeführt werden. In dem gezeigten Ausführungsbeispiel werden die zu übertragenden Tonsignale A zunächst in einem Coder K1 nach einem die psychoakustischen Phänomene des menschlichen Ohres ausnützenden Verfahren, beispielsweise nach MUSICAM (Masking Universal Subband Integrated Coding and Multiplexing, beschrieben in "MUSICAM an Universal Subband Coding System Description" von CCETT, IRT, Matsushita und Philips) in ihrem digitalen Datenfluß reduziert und dann über den Satellitensender UL zu den Satellitenempfängern E1 bis En übertragen. In gleicher Weise können digitale Fernsehsignale TV über einen entsprechenden Coder K2, in welchem ihr Datenfluß nach einem die psychooptischen Phänomene des menschlichen Auges ausnützenden Verfahren datenreduziert werden, über den Satellitensender UL zu den Empfängern E1 bis En übertragen. Bei diesem Satelliten-Übertragungsverfahren handelt es sich vorzugsweise um das sogenannte DSR-Verfahren.

Vor der Abstrahlung dieser Ton- bzw. Bildprogramme über die Sender S1 bis Sn werden nach dem bekannten DAB-Verfahren in einem entsprechenden Codierer und Modulator M1 bis Mn die COFDM-Signalpakete erzeugt, wobei jedes Signalpaket jeweils einer Datenmenge von 2,4 Mbit/s und einer Bandbreite von 1,5 MHz entspricht. Beim klassischen DAB-Hörfunk-System werden in einem Signalpaket jeweils sechs digitale Stereoton-Signale integriert und nach entsprechender Modulation über den Sender S1 bis Sn bitsynchron ausgesendet. Beim klassischen DAB-Hörfunk sendet jeder Sender S1 bis Sn also jeweils nur eines dieser Signalpakete aus, die ausgesendete Datenmenge ist also bei dem bekannten System auf 2,4 Mbit/s beschränkt.

In vielen Fällen ist es jedoch wünschenswert und von Vorteil, über ein solches bereits bestehendes DAB-Sendernetz oder ein neues digitales Rundfunk-Sendernetz auch nach Fig. 1 mittels der Sender S1 bis Sn eine größere Datenmenge zu übertragen, sei es nun, um die Anzahl der ausgestrahlten Ton-Programme auf mehr als sechs zu erhöhen oder sogar dazu, über dieses Gleichwellen-Sendernetz oder über einen Einzelsender Fernsehsignale bis zu HDTV-Qualität auszustrahlen.

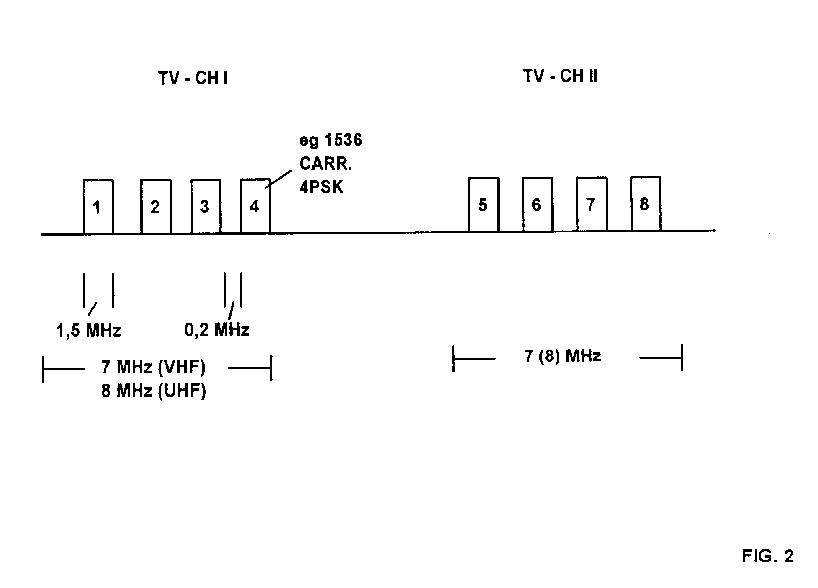

Um dies zu ermöglichen werden gemäß der Erfindung die Sender S1 bis Sn breitbandig ausgebildet, und auch die der Senderendstufe nachgeschalteten Stufen entweder entsprechend breitbandig ausgeführt oder nicht eingesetzt. Gleichzeitig wird der Codierer und Modulator M1 bis Mn für jeden Sender so ausgebildet, daß nicht nur ein COFDM-Signalpaket ausgesendet wird, sondern beispielsweise insgesamt acht Signalpakete, wie dies in Fig. 2 schematisch dargestellt ist. In dem Codierer M1 bis Mn werden nach dem bekannten DAB-Verfahren aus den übertragenen und bereits datenreduzierten Ton- bzw. Bildsignalen nach dem COFDM-Verfahren mit anschließender 4-PSK-Modulation insgesamt acht COFDM-Signalpakete 1 bis 8 erzeugt, von denen jedes eine Datenmenge von 2,4 Mbit/s enthält und von denen jedes eine Breite von 1,5 MHz mit dazwischenliegenden Lücken von 0,2 MHz aufweist. Jedes Signalpaket besteht nach dem DAB-Prinzip z.B. aus 1536 einzelnen Trägern, von denen jeder 4-PSK-moduliert ist. Jeweils vier solche Signalpakete können in einem Signalraster von 7 MHz untergebracht werden, alle acht Pakete also beispielsweise in zwei nebeneinanderliegenden Übertragungskanälen. Auf diese Weise ist es beispielsweise möglich, bis zu 8 x 6 = 48 einzelne Programme über ein und denselben Sender S1 bis Sn im Gleichwellennetz auszustrahlen. Fig. 2 zeigt ferner, daß auf diese Weise beispielsweise auch zwei Fernsehsignale TV-CH I und TV-CH II übertragen werden können, da in jedem Kanal jeweils bestehend aus vier COFDM-Signalpaketen insgesamt eine Datenmenge von 4 x 2,4 Mbit/s = 9,6 Mbit/s übertragen werden kann, was bereits in etwa PAL/D2-MAC bzw. PAL-Plus-Qualität entspricht. Es besteht auch die Möglichkeit, über die insgesamt acht Signalpakete nur ein einziges Fernsehsignal zu übertragen, da in diesem Fall dann bereits 19,2 Mbit/s an Datenmenge zur Verfügung steht und inzwischen bereits Verfahren zur Verfügung stehen, mit denen hochauflösende HDTV-Fernsehsignale auf eine Größenordnung von 20 Mbit/s datenreduziert werden können. Auf diese Weise ist es also möglich, in zwei TV-Kanälen ein Fernsehsignal mit HDTV-Bildqualität zu übertragen.

Es gibt schon die verschiedenartigsten Vorschläge zur Datenreduktion von digitalen Fernsehbildsignalen, die alle auf der Grundlage einer Basisbandcodierung mit Datenreduktion unter Ausnutzung der psychooptischen Phänomene des menschlichen Auges arbeiten, ähnlich wie beim Hörfunk das die psychoakustischen Phänomene des menschlichen Ohres ausnützenden MUSICAM-Datenreduktionsverfahren. Nach diesem Verfahren ist es z.B. möglich, selbst für digitale Fernsehsignale in HD-Qualität, also für Fernsehsignale mit einem Bildformat von 16:9 und hochauflösenden Zeilenstrukturen mit einer Zeilenzahl von etwa 1000 oder mehr (digitale HDTV-Signale) die Datenrate auf unter 20 Mbit/s zu reduzieren. Nach dem sogenannten DigiCipher-Verfahren (Jerrold A. Heller & Woo H. Paik, General Instrument Corporation, USA, "The DigiCipher HDTV Broadcast System", Montreux Record 1991; Dr. Matthew Miller, Jerrold Communications, USA, "Digital HDTV on Cable", Montreux Record 1991) ist beispielsweise für Basisband- und Kanalcodierung eine Datenreduktion auf insgesamt 19,43 Mbit/s möglich, nach dem DSC-HDTV-Verfahren (Wayne C. Luplow and Pieter Fockens, Zenith Electronics Corporation, USA, "The AllDigital Spectrum Compatible HDTV System", Montreux Record 1991) ist eine Datenrate von 21,5 Mbit/s erreichbar, nach Dig. TV für SNG (M. Cominetti, S. Chucci, A. Morello, B. Sacco, RAI, Telettra S.p.A. Italien, "An Experimental Digital TV System für Satellite New Gatherin (SNG), Montreux Record 1991) ist eine Datenreduktionsrate in ähnlichem Maße erreichbar.

Eine andere Möglichkeit zur Erhöhung der auszustrahlenden Datenmenge besteht darin, in den Codierern M1 bis Mn die einzelnen COFDM-Signalpakete mit einer mehr als vier Phasenlagen benutzenden PSK-Modulation zu erzeugen, so daß also bereits in jedem einzelnen Signalpaket z.B. die doppelte Datenmenge übertragen wird. Letztere Möglichkeit kann natürlich auch mit der zuerst erwähnten Möglichkeit, parallel gleichzeitig mehrere Signalpakete auszustrahlen und die zu übertragende Datenmenge in mehreren Paketen unterzubringen, kombiniert werden. Einzelheiten für diese Möglichkeit der z.B. 16-PSK-Modulation ergeben sich aus der nachfolgenden Beschreibung der Satelliten-Übertragungsstrecke.

Wenn über die einzelnen Sender S1 bis Sn eine größere Datenmenge ausgestrahlt werden soll muß natürlich auch eine größere Datenmenge von den Studios zu den einzelnen Sendern über die Satelliten-Übertragungsstrecke übertragen werden. Dazu gibt es die verschiedenartigsten Möglichkeiten.

Eine erste Möglichkeit besteht darin, hierfür die von der Bundespost Telecom für die Durchführung von Feldversuchen im Zusammenhang mit solchen DAB-Hörfunk-Sendernetzen angebotene Satelliten-Übertragungsstrecke 30/20 GHz des Fernmeldesatelliten Kopernikus zu verwenden.

Durch geeignete Abwandlung dieser Satelliten-Übertragungsstrecke kann diese dann auch für den erfindungsgemäßen Zweck zur gleichzeitigen Aussendung von insgesamt vier COFDM-Signalpaketen ausgenutzt werden, also mit einer Datenmenge von insgesamt 9,6 Mbit/s.

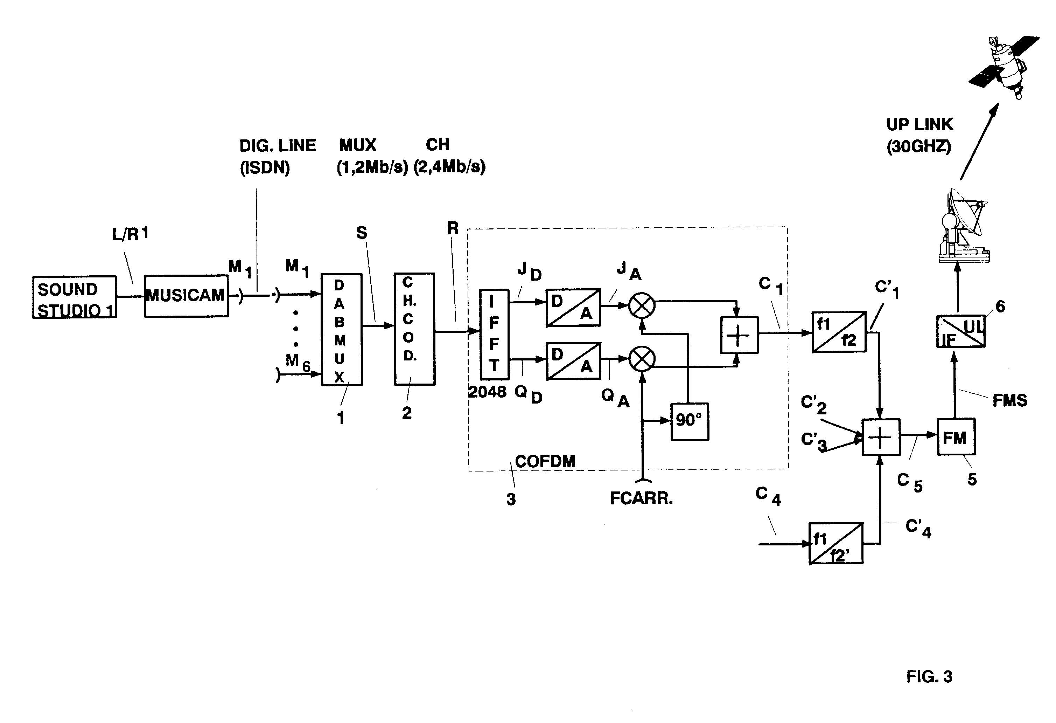

Fig. 3 bis 5 zeigen schematisch das hierfür vorgesehene Konzept. Die digitalen Stereo-Tonsignale L/R der Tonstudios werden zur Datenreduktion nach dem MUSICAM-Verfahren mit z.B. 96 kbit/s pro Monosignal codiert (MUSICAM = Masking Universal Subband Integrated Coding and Multiplexing, beschrieben in "MUSICAM, an Universal Subband Coding System Description" von CCETT, IRT, Matsushita & Philips). Sechs solche datenreduzierte Tonsignale M1 bis M6 werden in einem DAB-Multiplexer 1 zu einem Datenstrom MUX = 1, 2Mbit/s zusammengefaßt (inklusive Run-in und Null-Symbol sowie Organisations/Datenkanal mit je sechzehn kbit/s). Danach erfolgt die DAB-Kanalcodierung mit einem Convolutional Code 1/2, so daß am Ausgang des Kanalcodierers 2 ein Datenstrom CH = 2,4 Mbit/s ansteht. In einem darauffolgenden COFDM-Modulator 3 wird über eine inverse Fourier-Transformation ein I- und Q-Signal digital erzeugt, das die z.B. 1536 Träger mit jeweils 4-PSK-Modulation des COFDM-Pakets repräsentiert. Durch D/A-Wandlung des I- und Q-Signals und einem nachfolgenden I/Q-Modulator'wird ein 1,5 MHz breites COFDM Signal C gewonnen. Mit insgesamt vier derartigen DAB-Bausteinen 1, 2, 3, 4 werden aus insgesamt vierundzwanzig datenreduzierten Tonsignalen M1 bis M24 vier COFDM-Signalpakete C1 bis C4 von jeweils 1,5 MHz Breite erzeugt, die in ein 7 MHz-Kanalraster gepackt werden und zusammengefaßt als Kanalsignal $C_s$ dem Frequenzmodulator 5 der 30/20 GHz-Satelliten-Übertragungsstrecke zugeführt wird. Der frequenzmodulierte Zwischenträger mit entsprechender Preemphase wird über einen Frequenzumsetzer 6 der 30 GHz-Uplink-Einrichtung der Satelliten-Übertragungsstrecke zugeführt.

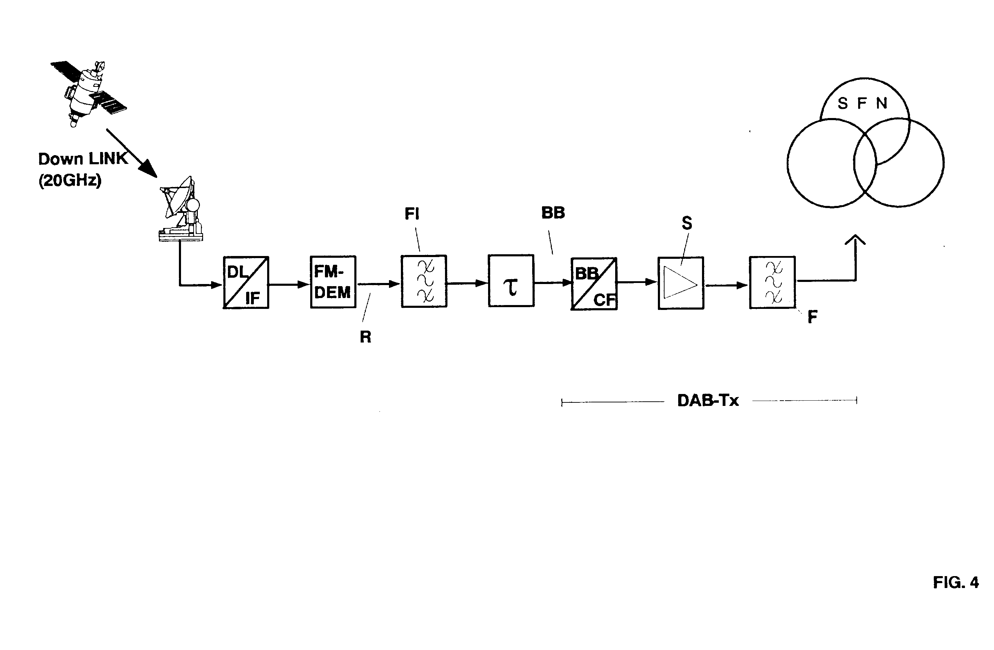

Auf diese Weise können in einem analogen Übertragungsverfahren vier COFDM-Pakete mit zusammen vierundzwanzig verschiedenen Programmen den einzelnen Sendern eines Gleichwellennetzes innerhalb eines Landes zugeführt werden. Nach Fig. 4 besitzt jede DAB-Sendestation eine 20 GHz-Empfangseinrichtung, in welcher das Satelliten-Empfangssignal auf eine Zwischenfrequenz umgesetzt wird mit nachfolgender FM-Demodulation und Deemphase. Nach Laufzeitausgleich und Umsetzung der Basisbandsignale in die Sendefrequenzlage, beispielsweise auf den Kanal 12 im Fernsehband III oder den Kanal 3 (Frankreich) bzw. Kanal 4 (Bundespost Telecom Berlin) des Fernsehbandes I erfolgt die Leistungsverstärkung im Sendeverstärker (Leistungsklasse 10 W bis 1 kW) und nach Durchlaufen eines unter Umständen erforderlichen Kanalfilters die Abstrahlung über die Sendeantenne. Die so über mehrere DAB-Sendestationen bitsynchron abgestrahlten Signale können von handelsüblichen DAB-Empfängern empfangen werden.

Fig. 5 zeigt einen üblichen DAB-Empfänger, mit dem im Gleichwellennetz beispielsweise wiederum der Kanal 12 empfangen wird. Die darauf übertragenen COFDM-Pakete werden selektiert, so daß nach dem COFDM-Decoder an dessen Ausgang die entsprechend datenreduzierten Tonsignale M zur Verfügung stehen. Über einen MUSICAM-Decoder und entsprechenden NF-Verstärker werden die Links/Rechts-Lautsprecher des Empfängers angesteuert.

Diese von der Telekom angebotene Übertragungstechnik kommt mit einer minimalen Anzahl von Basisband- und Kanalcodiereinrichtungen aus, es wird über die Frequenzmodulation auch ein eingeführtes Satelliten-Übertragungsverfahren angewendet, ebenso ein bereits bestehender 30/20 GHz-Transponder auf den Satelliten Kopernikus. An den DAB-Sendestationen können außerdem Gerätekomponenten eingesetzt werden, die schon vorhanden sind oder aus vorhandenen durch Adaption abgeleitet werden.

Abweichend von dem bekannten DAB-System, nach welchem nach dem FM-Demodulator über einen Bandpaß nur dasjenige der vier empfangenen COFDM-Signalpakete ausgesiebt wird, das über die Sendestation ausgestrahlt werden soll, werden gemäß Fig. 4 alle vier COFDM-Signalpakete gleichzeitig über den Sender S ausgestrahlt. Dazu wird lediglich das Filter FI nicht eingesetzt. Im Empfänger werden entsprechend vier COFDM-Signalpakete ausgewertet und in Tonbzw. Bildsignale rückgewandelt.

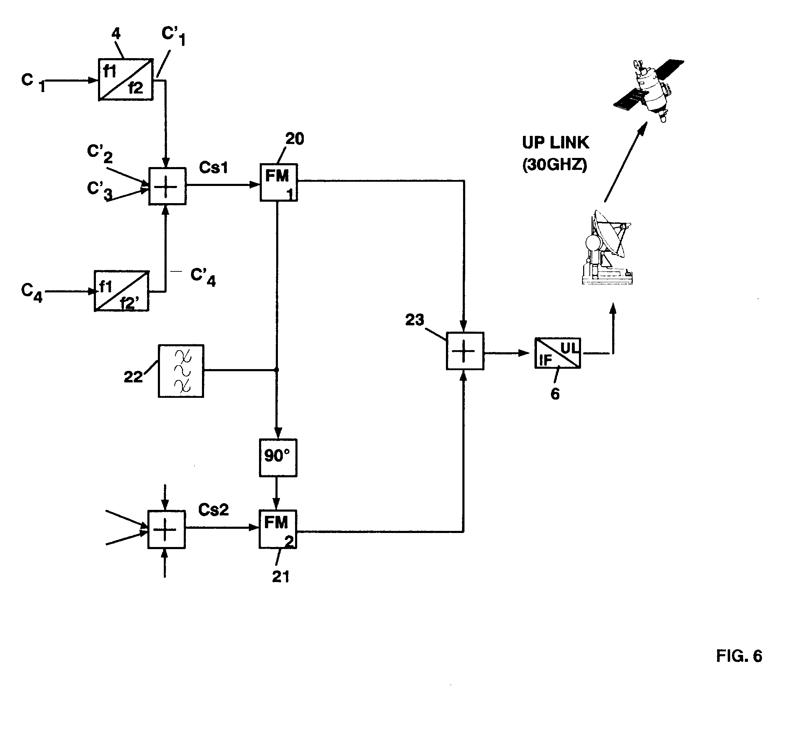

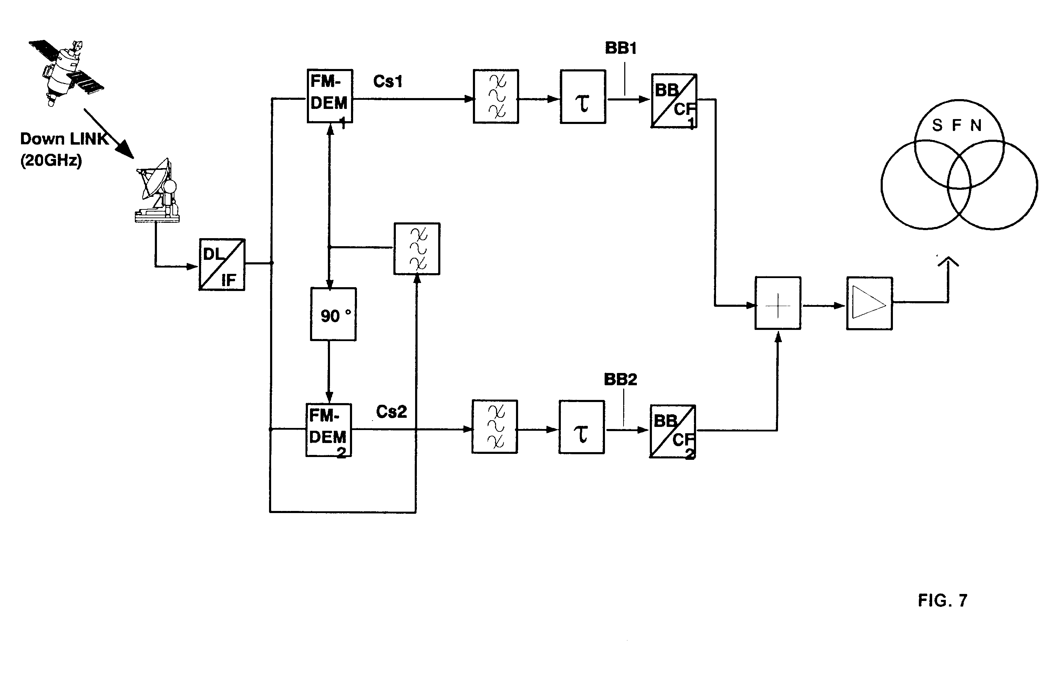

Fig. 6 und 7 zeigen eine weitere Möglichkeit zur Verdopplung der Übertragungskapazität der Satelliten-Übertragungsstrecke und zwar unter Verwendung eines neuartigen FM-Modulators.

Für die Amplitudenmodulation sind sogenannte Quadraturamplitudenmodulatoren bekannt (Mäusl, Analoge Modulationsverfahren, Hüthig Verlag, S. 55).

Dieses Prinzip kann auch für Frequenz- bzw. Phasenmodulation angewendet werden, wie dies Fig. 6 zeigt. Dazu werden zwei Modulatoren 20 und 21 benutzt, die aus einem Trägergenerator 22 mit gegeneinander 90°-Phasenverschiebung gespeist sind. Dem einen Modulator 20 wird das eine Kanalsignal $C_{s1}$ bestehend aus vier zusammengesetzten COFDM-Paketenzugeführt, dem anderen Modulator 21 das auf gleiche Weise erzeugte Kanalsignal $C_{s2}$ jeweils bestehend aus vier COFDM-Signalpaketen aufbereitet durch die gleichen DAB-Bausteine 1, 2, 3, 4 wie dies im Zusammenhang mit Fig. 3 beschrieben ist. Die Ausgangssignale der beiden Frequenz-Modulatoren 20 und 21 werden in einem Addierglied 23 zusammengefaßt und unmittelbar dem Zwischenfrequenzeingang des Frequenzumsetzers 6 der Satelliten-Übertragungsstrecke zugeführt. Auf diese Weise können also über die gleiche Satelliten-Übertragungsstrecke, über welche nach dem Vorschlag gemäß Fig. 3 insgesamt 4x6 = 24 Programme übertragen werden können, doppelt so viele Programme übertragen werden.

Da die Frequenzmodulation auch als Phasenmodulation dargestellt werden kann, ist das gleiche auch mit einem Quadratur-Phasenmodulator möglich, in diesem Fall sind die Modulatoren 20 und 21 entsprechende Phasen-Modulatoren.

Fig. 7 zeigt den zugehörigen DAB-Empfänger an einer der DAB-Sendestationen. Auch hier ist wieder ein entsprechender Quadratur-Phasendemodulator vorgesehen jeweils bestehend aus zwei Demodulatoren 25 und 26, denen das Zwischenfrequenzsignal des Satellitenempfängers zugeführt wird und die wieder aus einem Trägeroszillator 27 mit gegenseitiger 90°-Phasenverschiebung gespeist sind. Auf diese Weise werden wiederum wie beim Quadratur-Amplituden-Demodulator mit zwei getrennten FM-Demodulatoren die zwei ursprünglichen Kanalsignale $C_{s1}$ und $C_{s2}$ rückgewonnen, womit z.B. zwei getrennte DAB-Sender mit jeweils 24 Programmen versorgt werden können oder die Signale für einen DAB-Sender aus einem doppelten Programmangebot ausgewählt werden können. Die beiden Basisbandsignale BB1 und BB2 werden in der Trägerfrequenzlage zusammengeführt und über den entsprechenden breitbandigen Sender wird das Gleichwellennetz oder ein Einzelsendersystem gespeist.

Eine weitere Möglichkeit für die Erhöhung der Übertragungskapazität besteht in der Verwendung einer DSR-Satelliten-Hörfunk-Übertragungsstrecke für die Übertragung der aufbereiteten digitalen Signale zu den einzelnen DAB-Sendern des Gleichwellensendernetzes.

Fig. 8 zeigt den Prinzipaufbau eines solchen DSR-Systems auf der Senderseite.

Fig. 9 zeigt die zugehörige Empfangseinrichtung für Empfang mit Konsumergerät, Verteilung über Breitbandkanal und Empfang mit professionellem DSR-Receiver.

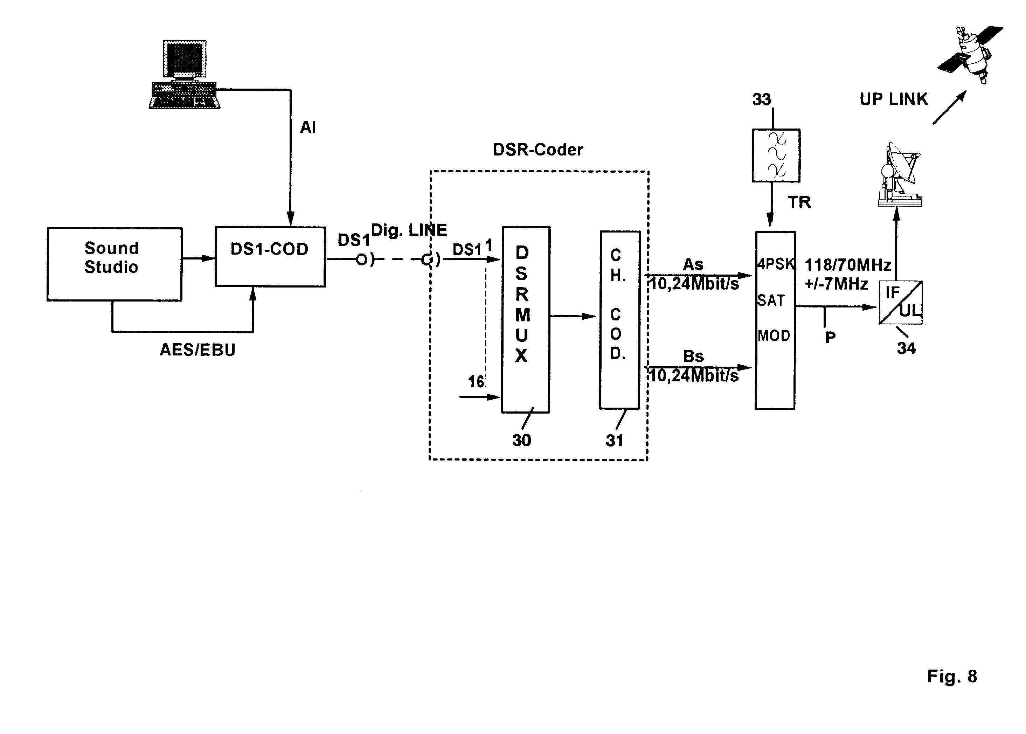

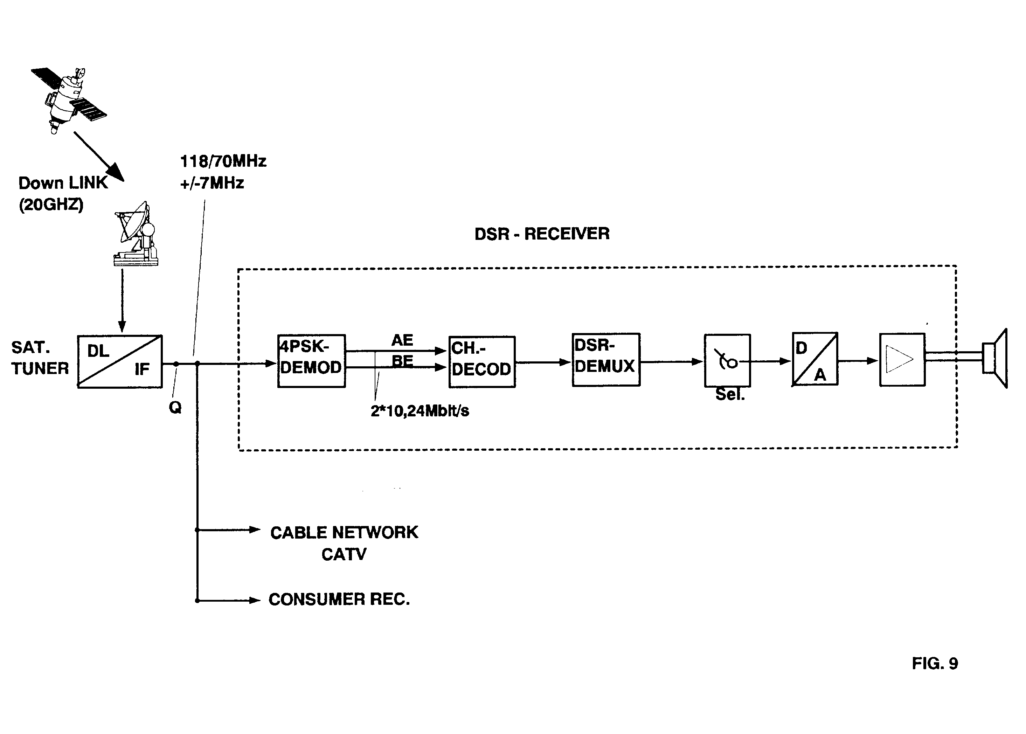

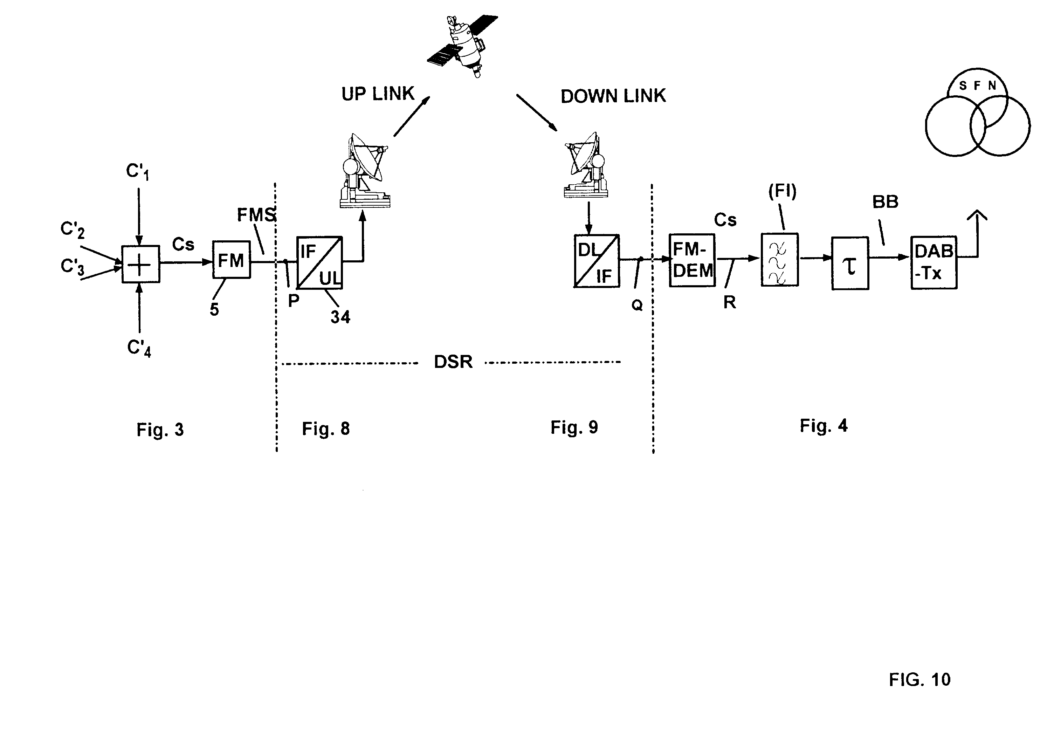

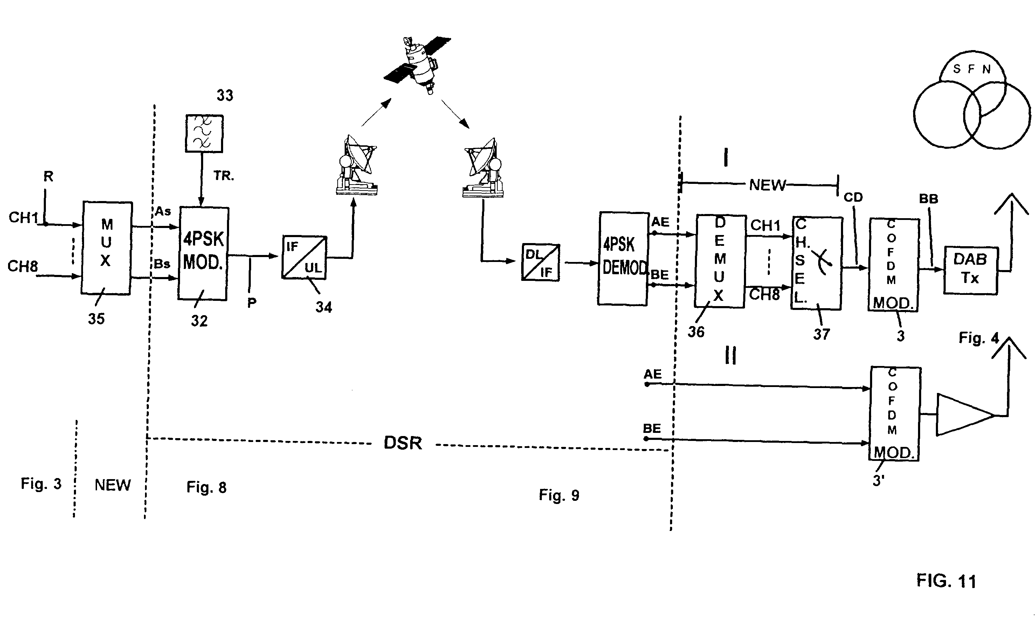

Bei sog. DSR-Verfahren (Digital Satellite Radio; beschrieben in "Neues von Rohde & Schwarz", Heft 114, S. 14 bzw. im Datenblatt zum DSR-Modulator SFP der Firma Rohde & Schwarz) werden sechzehn nach dem sogenannten DS1-Verfahren (Digital Sound 1 Mbit/2; beschrieben in "Neues von Rohde & Schwarz, Heft 114, S. 14) erzeugte digitale DS-Tonsignale, beispielsweise über Leitungen einem DSR-Datenmultiplexer 30 zugeführt und dort verkämmt (Fig. 8). Aus den insgesamt sechzehn DS1-Signalen werden in einem Kanalcodierer 31 zusammen mit Rahmensynchronwerten zwei 10,24 Mbit/s-Datenströme $A_s$ und $B_s$ erzeugt, die in einem 4-PSK-Modulator 32 zugeführt werden, durch welchen der ZF-Träger 33 von 118 bzw. 70 MHz 4-PSK-moduliert wird. Dieser 4-PSK-modulierte ZF-Träger wird dann in einem Frequenzumsetzer 34 auf die Sendefrequenz von beispielsweise 18 GHz für die Satelliten-Übertragungsstrecke umgesetzt.

Empfangsseitig wird gemäß Fig. 9 das beispielsweise 12 GHz-Downlink-Satellitensignal auf eine Zwischenfrequenz von 1 GHz und dann auf 118 MHz umgesetzt, und dann über handelsübliche DSR-Empfangsgeräte, die inzwischen bereits schon als Konsumgerät zur Verfügung stehen, weiter aufbereitet.

Eine solche bereits installierte und mit einfachen Geräten betreibbare DSR-Satelliten-Übertragungsstrecke gemäß Fig. 8 und 9 kann zur Übertragung der Programme zu den einzelnen Sendestationen eines DAB-Rundfunk-Sendernetzes benutzt werden. Dafür gibt es die verschiedenartigsten Möglichkeiten.

Die erste Möglichkeit besteht nach Fig. 10 darin, die jeweils 1,5 MHz breiten COFDM-Signale c1' bis c4' des DAB-Systems nach Fig. 3 nach Frequenzmodulation im Modulator 5 als FM-Signal FMS unmittelbar am 118 ± 7 MHz-Eingang P des Frequenzumsetzers 34 einzuspeisen. Auf dem insgesamt 27 MHz breiten Frequenzband des Transponders können auf diese Weise vier COFDM-Pakete gleichzeitig übertragen werden. Empfangsseitig stehen diese vier COFDM-Signalpakete am Ausgang des 118 MHz-Umsetzers am Punkt Q wieder zur FM-Demodulation zur Verfügung. Das Signal $C_s$ bei R wird gemäß Fig. 4 weiterverarbeitet und zwar je nach Anwendung mit oder ohne COFDM-Auswahlfilter.

Eine andere Möglichkeit besteht darin, die 2x10,24 Mbit/s-Schnittstelle $A_s$ bzw. $B_s$ des DSR-Modulators für die Einspeisung der Signale nach Fig. 11 auszunutzen.

Eine Möglichkeit hierfür besteht z.B. darin, an der Schnittstelle CH nach der DAB-Kanalcodierung mit 2,4 Mbit/s pro COFDM-Paket (Fig. 3 Punkt R) abzuzweigen und insgesamt acht solche COFDM-Pakete über einen rechnergesteuerten Multiplexer 35 der Schnittstelle $A_s/B_s$ des DSR-Modulators zuzuführen. Auf diese Weise können 8x2,4 = 19,2 Mbit/s über den zur Verfügung stehenden 20,48 Mbit/s-Datenkanal übertragen werden. Es stehen am professionellen Empfänger (Satellitenempfänger DSRU bzw. DSRE der Firma Rohde & Schwarz oder ein entsprechend geeigneter Konsumer-Empfänger der Firma Grundig, Philips, Telefunken, Sony oder Technisat) nach der 4-PSK-Demodulation wieder die Signale $A_E B_E$ transparent zur Verfügung. Die restliche Datenkapazität von 1,28 Mbit/s wird für einen angepaßten Datenrahmen und gegebenenfalls für Zusatzinformationen genutzt. Dieses Verfahren gewährleistet in hohem Maße die Forderung nach bitsynchroner Ausstrahlung des Senders des DAB-Gleichwellennetzes, da an der DAB-Station nach der Schnittstelle Kanaldatenrate (2,4 Mbit/s) lediglich der COFDM-Modulator (wie in Fig. 3), der Frequenzumsetzer und der Linearverstärker folgen, wie dies aus Fig. 4 ersichtlich ist. In diesem Beispiel wird an der Schnittstelle $A_E/B_E$ eine Datenkapazität von 8x2,4 Mbit/s = 19,2 Mbit/s angeboten. Über die Bausteine DEMUX (36) und CH SEL (37) kann ein herkömmlicher DAB-Sender mit COFDM-Coder/Modulator und Verstärker gespeist werden (Lösung I nach Fig. 11). Es kann aber auch ein entsprechend ausgelegter COFDM-Modulator 3' mit höherer Datenkapazität und entsprechend breitbandigem Verstärker direkt angesteuert werden (Lösung II). Der COFDM-Modulator 3' kann gedanklich aus der Parallelschaltung von 8 COFCM-Modulatoren entsprechend I realisiert sein. In der Praxis wird hier eine technisch integrierte Lösung eingesetzt.

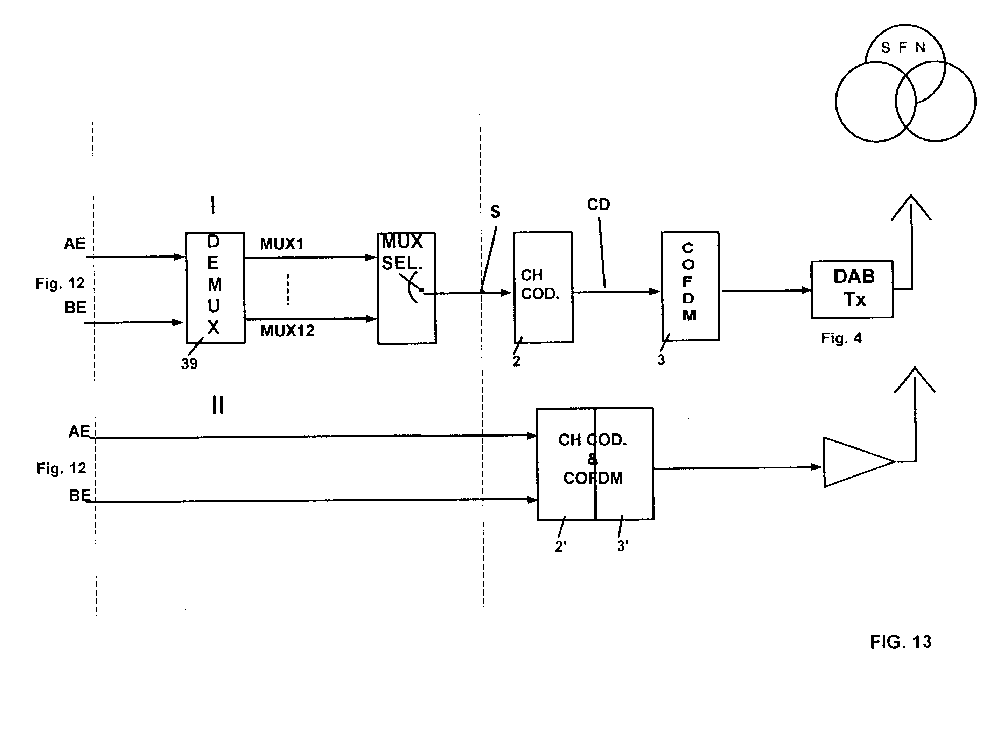

Eine weitere Möglichkeit gem. Fig. 12 besteht darin, unmittelbar an der Schnittstelle 1,2 Mbit/s vom Ausgang des DAB-Multiplexers 1 an Punkt S nach Fig. 3 abzuzweigen und wiederum mehrere MUX-Signale (bis zu z.B. 12) über einen rechnergesteuerten Multiplexer 38 unmittelbar an der Schnittstelle $A_s/B_s$ des DSR-Modulators nach Fig. 8 einzuspeisen. Bei dem DSR-Verfahren werden etwa 5 Mbit/s für Prüfbits, Synchronimpulse sowie für die Rahmen-Synchronisation benutzt und es stehen somit von den insgesamt 20,48 Mbit/s als Nettobitrate ca. 15 Mbit/s zur Verfügung. Damit können z.B. insgesamt zwölf 1,2 Mbit/s MUX-Signale über die DSR-Übertragungsstrecke übertragen werden.

Auch hier ist die Forderung nach bitsynchroner Aussendung gegeben, da an der DAB-Sendestation empfangsseitig ein fester Algorithmus für die Bitzuweisung je Träger vorliegt.

Fig. 13 zeigt die Empfangsseite der Satelliten-Übertragungsstecke und die Aufbereitung der COFDM-Signalpakete für die Speisung eines herkömmlichen DAB-Senders für das herkömmliche DAB-Verfahren (I nach Fig. 11) sowie in der Version II einen Sender für digitalen Rundfunk (Ton und/oder TV) mit einer Kanalcodierung und COFDM-Modulation für z.B. 12x1,2 Mbit/s bis 2 x 10,24 Mbit/s.

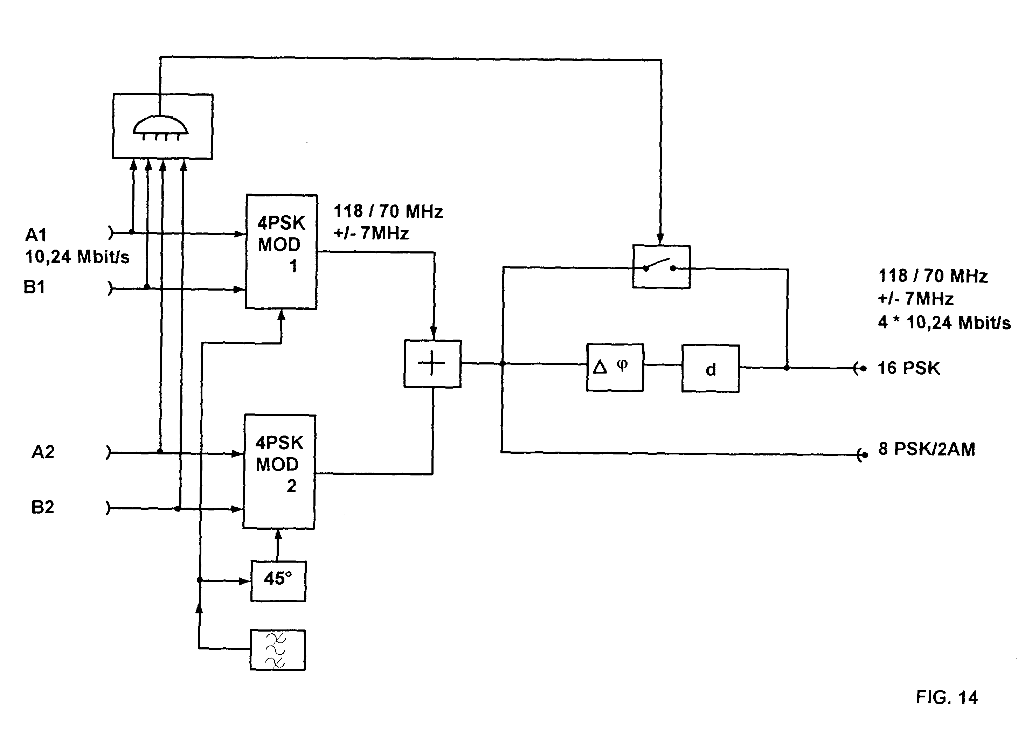

Ein weiterer Ansatz zur z.B. Verdopplung der Datenrate bei der Programmzuführung zu den digitalen Rundfunksendern des terrestrischen Gleichwellennetzes oder von Einzelsendern auf der Basis DSR ist die Erhöhung der PSK-Modulation z.B. statt 4 PSK (Standard DSR) eine 8 oder 16 PSK-Modulation. Dies ist einsetzbar, da die BER (Bit Error Rate) bei 4 PSK-DSR bereits sehr hoch ist (typ. 1x10-5, System Redundanz) und in dem hier beschriebenen Anwendungsfall professionelle Empfangseinrichtungen angebracht sind, die auf das eingesetzte Modulationsverfahren angepaßt werden können (z.B. Spiegeldurchmesser, outdoor unit). Da sich der Entscheidungsbereich des Phasen-Demodulators bei höherer PSK entsprechend reduziert, kann auf diese Weise der geringere Modulationsgewinn ausgeglichen werden. Es bleibt die höhere Übertragungskapazität pro PSK-Schritt bei entsprechender Bandbreite. In Fig. 14 ist das Prinzipschaltbild für DSR mit 16 PSK dargestellt. Es sind zwei DSR-4PSK-Modulatoren mit um 45°-gedrehten Zeigerkoordinaten und der Addition der Ausgangssignale eingesetzt. Am Ausgang der Addierstufe entsteht ein Signal mit 8 Phasenlagen und zwei Amplitudenstufen (entsprechend dem Amplitudenverhältnis der beiden Diagonalen in einem gleichseitigen Parallelogramm mit den Winkeln 45° und 135°). Dieses Signal kann als 8 PSK/2AM-Signal gesendet werden. Das Signal kann auch in ein 16 PSK-Signal gewandelt werden, durch einen geschalteten Phasenschieber mit 22,5° und Dämpfungsglied mit rechnerisch 7,66dB-Dämpfung (20log (tan 22,5°)). Diese Schaltung mit Phasenschieber und Dämpfungsglied wird bei den entsprechenden Bitmustern der Eingangssignale A1, B1 und A2, B2 überbrückt. Das Schaltsignal aus den entsprechenden Bitmustern wird in einer einfachen Logik erzeugt, die ein Steuersignal bei 8 der 16 möglichen 4-Bit-Zustände des Eingangssignals liefert.

Der Aufbau mit zwei Geräten Coder/Modulator (und Demodulator/Decoder) kann in einfacher Weise für Labor- und Feldversuche angewendet werden. Für den professionellen Betrieb ist eine nach dem Schaltungsaufwand optimierte Lösung angebracht.

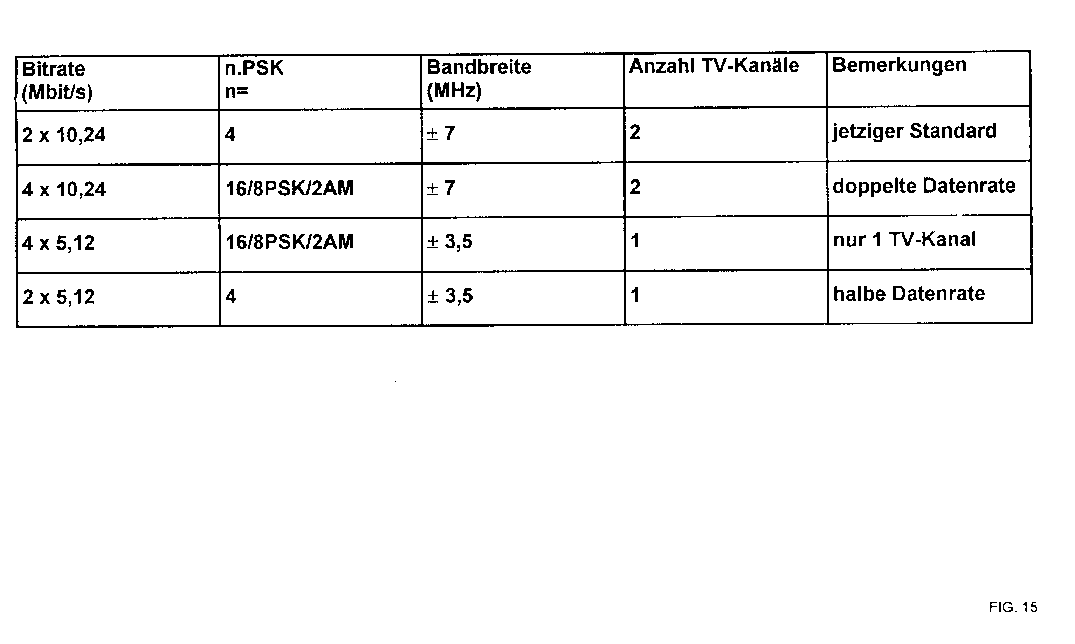

Fig. 15 zeigt die DSR-Varianten bei den Beispielen 4 und 16 PSK (bzw. 8PSK/2AM) (8 PSK oder höhere PSK entsprechend) mit den abgeleiteten Bitraten und benötigten Bandbreiten bzw. TV-Kanälen.

Die erfindungsgemäße Erhöhung der Übertragungskapazität für Programme kann auch noch in anderer Weise für andere Zwecke genutzt werden, die erhöhte Übertragungskapazität muß nicht unbedingt nur für die Übertragung einer erhöhten Anzahl von Hörfunk-Programmen genutzt werden. Anstelle der Übertragung von Programmen für das DAB-Gleichwellen-Sendernetz könnte ein Teil der Übertragungskapazität auch für die Übertragung von Regional- bzw. Lokal-Programmen zu einzelnen ausgewählten Senderstationen ebenfalls über die Satelliten-Übertragungsstrecke ausgenutzt werden.

In der konventionellen FM-Technik kann ein Sender von überregionaler Programmsendung auf lokal umgeschaltet werden. Dies ist in einem Gleichwellennetz natürlich nicht möglich. Wenn nun das landesweite Programm in einem COFDM-Kanal fortgesetzt übertragen wird, lediglich mit einer Zusatzschaltinformation z. B. in Form einer diskreten Trägerschwingung am Rande des COFDM-Paketes das dem Empfänger mitteilt, daß nunmehr auch regional auf einem anderen COFDM-Paket übertragen wird, kann aufgrund der Schaltinformation der Empfänger entweder automatisch oder vom Benutzer gewählt auf die Lokalsendungen umschalten. Der DAB-Sender überträgt dann in einem COFDM-Paket das landesweite Signal mit bestimmer Leistung, und mit entsprechend reduzierter Leistung gleichzeitig auf einen anderen COFDM-Kanal das Regionalprogramm.

Mit der Möglichkeit an eine DAB-Sendestation über Satellit z.B. acht COFDM-Pakete zu übertragen, (entweder auf der analogen COFDM-Ebene oder auf der Ebene vor oder nach der DAB-Kanalcodierung) über z.B. das sehr ökonomische Verfahren mit DSR liegen an einer DAB-Sendestation acht COFDM-Pakete an, aus denen man vier Kanäle sortieren kann für z.B. einem System mit einem Fernsehkanal und einem DAB-System mit vier Gleichwellennetzen. Man kann aber auch diese acht COFDM-Pakete sozusagen parallel zu zwei TV-Kanälen z.B. Fernsehkanal 11 und 12 unmittelbar nebeneinander oder auch getrennt übertragen. Legt man nun die Datenkapazität nach der DAB-Kanalcodierung, d.h. 2,4 Mbit/s pro Paket, zugrunde, steht mit diesem System ein Übertragungssystem mit 19,2 Mbit/s incl. Kanalcodierung zur Verfügung. Diese 19,2 Mbit/s belegen zwei TV-Kanäle und es ist nun ein DAB-System denkbar, in dem landesweit statt sechs, zwölf Programme übertragen werden können aber auch ein System zur Übertragung von digitalen TV-Signalen.

In den bisherigen Beispielen wurde dargelegt wie die Datenkapazität übe Satellit auf DSR-Basis für das herkömmliche DAB-System optimal genützt werden kann und wie ein digitales Rundfunksystem mit einer Datenkapazität bis beispielsweise 8x2,4 Mbit/s = 19,2 Mbit/s durch gedankliche Parallelschaltung von im Beispiel 8 COFDM-Codierern und Modulatoren über einen breitbandigen Verstärker in zwei TV-Kanälen aufgebaut werden kann. Im folgenden wird ein Modulationsverfahren erläutert, mit dem eine doppelte Datenkapazität pro COFDM-Signalpaket erreicht wird und damit z.B. 19,2 Mbit/s in einem TV-Kanal mit 7 oder 8 MHz-Bandbreite in einem Gleichwellennetz oder für einen Einzelsender für mobilen Empfang übertragen werden können. Dies gilt wie gesagt für mobilen Empfang womit gleichzeitig auch der portable oder stationäre Empfang möglich ist.

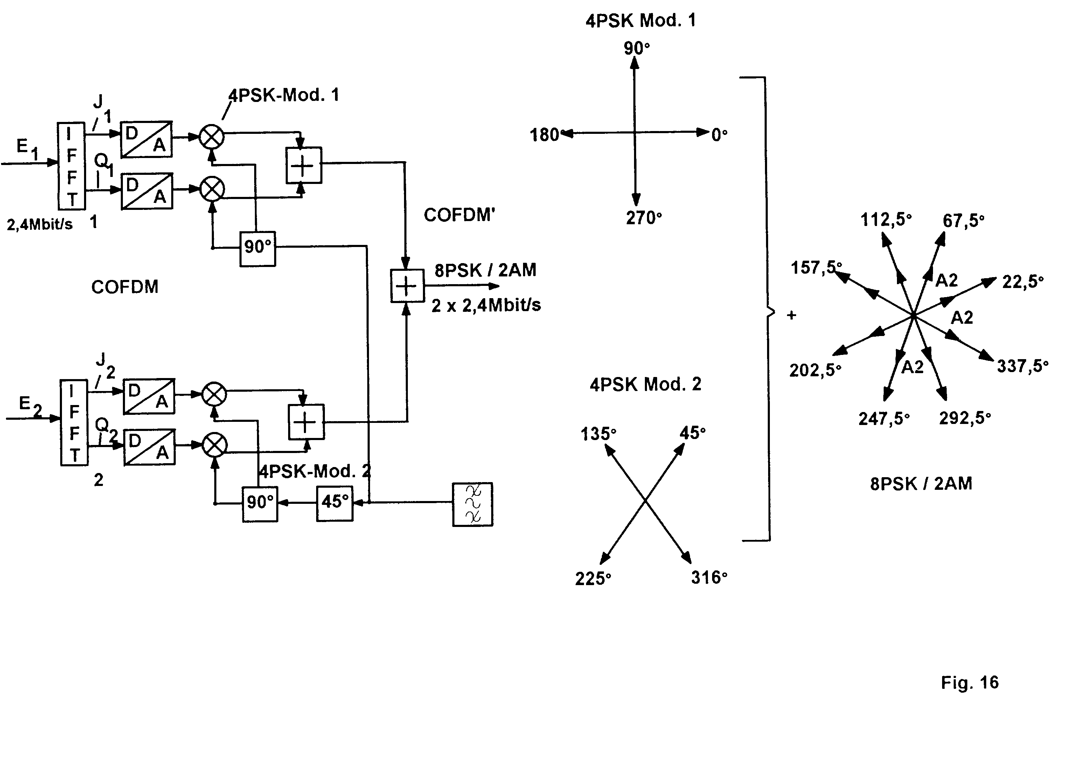

Das Prinzipschaltbild hierzu ist in Fig. 16 dargestellt. Es sind zwei DAB-COFDM-Coder/Modulatoren Mod 1 und Mod 2 eingesetzt mit um 45° gedrehten Zeigerdiagramm-Koordinaten und der einfachen Addition der Ausgangssignale.

Es ergibt sich damit eine 8 PSK pro COFDM-Träger mit zwei Amplitudenstufen A1 und A2 entsprechend dem Amplitudenverhältnis der beiden Diagonalen in einem gleichseitigen Parallelogramm mit den Winkeln 45° und 135°. Dieses Signal kann als 8 PSK/2AM-Signal gesendet werden. Es wird erzeugt über die Schaltungsauslegung mit jeweils doppelter IFFT, D/A-Wandlung und I/Q-Modulation (QAM).

In Fig. 16 sind die zugehörigen Zeigerdiagramme für die beiden 4 PSK-Modulatoren Mod1 und Mod2 dargestellt, deren Phasenlagen um 45° gegeneinander verdreht sind. Daneben ist das Zeigerdiagramm der 8 PSK/2AM-Modulation dargestellt, die sich aus der geometrischen Addition der beiden 4 PSK-Modulationen in der Addierstufe ergeben, nämlich acht unterschiedliche Phasenlagen mit jeweils zwei Amplitudenstufen A1 bzw. A2. Die beiden Amplitudenstufen A1 und A2 entsprechen den Diagonalen in einem gleichseitigen Parallelogramm mit dem Spitzenwinkel von 45°. Diese 8 PSK/2AM-Modulation kann auf sehr einfache Weise realisiert werden, da nur zwei übliche 4 PSK-Modulatoren und eine Addierstufe nötig ist. Die damit erreichte Kombination einer PSK-Modulation mit einer AM-Modulation hat darüber hinaus den Vorteil gegenüber einer nur höheren PSK, daß auch eine einfachere Demodulation und Decodierung im Empfänger möglich ist. Im Empfänger ist nur ein Phasendetektor für acht Phasenlagen nötig und ein zusätzlicher Amplituden-Demodulator für nur zwei Pegelstufen. Die wesentliche Erhöhung der übertragenen Datenmenge erfordert also auch empfangsseitig geringen Aufwand und ist diesbezüglich einer nur erhöhten PSK überlegen.

Für Labor- und Feldversuche kann die Technik mit doppelten Sende- und Empfangsgeräten sehr einfach eingesetzt werden, für den professionellen Betrieb ist eine aufwandsoptimierte Lösung angebracht.

DAB und DSR haben beide 4 PSK-Modulation, lediglich sind bei DAB viele Träger eingesetzt (z.B. 1536) bei DSR jedoch nur ein Träger.

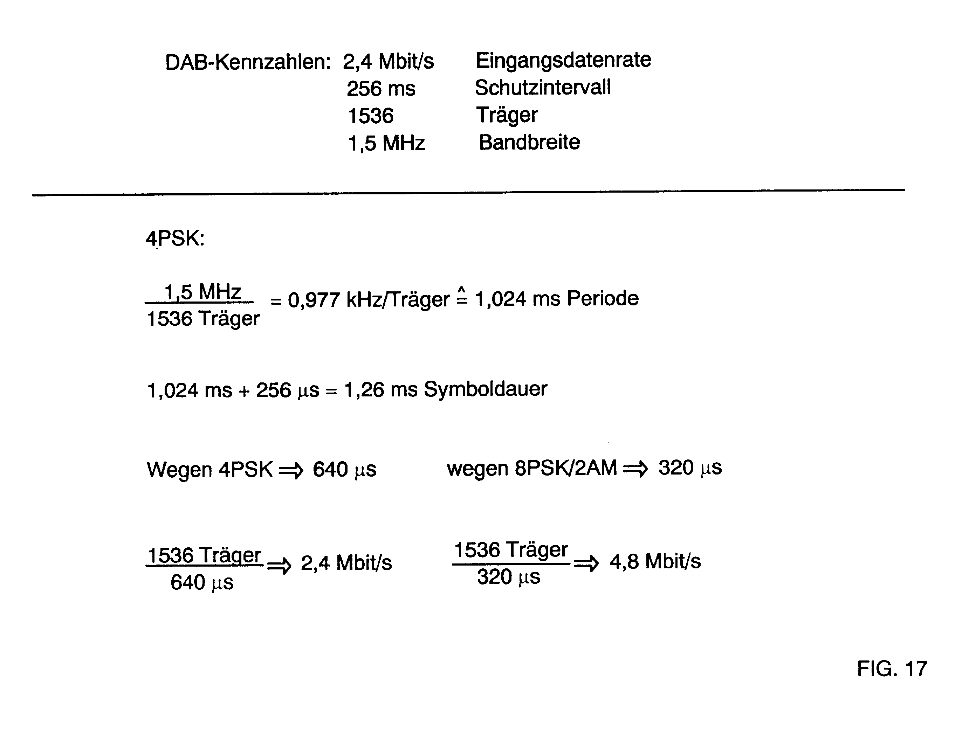

Der Einfluß der höheren PSK (z.B. 16 PSK) ist in Fig. 14 für DSR erläutert. Bei DAB mit 8 PSK/2AM gilt dies ebenfalls. Das eingesetzte Schutzintervall und die Orthogonalität bleiben (Fig. 17). Es kommt das Kriterium zweier Amplitudenstufen hinzu bzw. es verringert sich der Entscheidungsbereich des Phasendemodulators. Hierzu wird entgegengewirkt durch z.B. entsprechende Forward Error Correction (FER) bzw. Kanalcodierung, Zeit- und Frequenz-Interleaving und ggf. einer computerunterstützten "intelligenten" Codierung und Decodierung (im folgenden bei Trellis-Codierung und Viterbi-Decodierung erläutert).

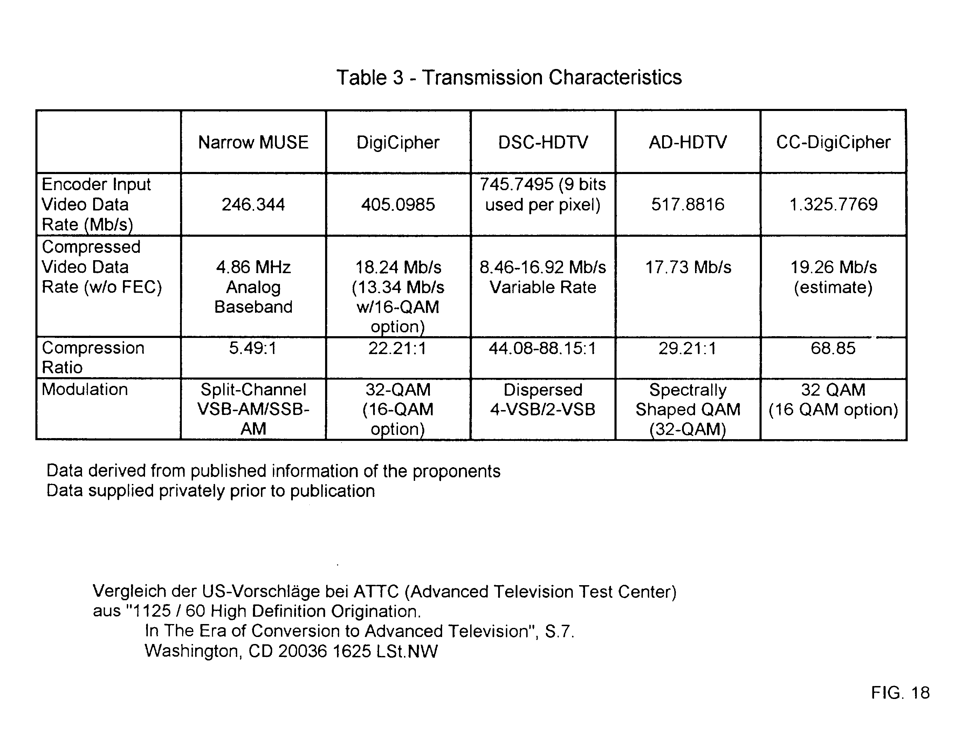

Das abgewandelte DAB-Verfahren mit 4 COFDM-Paketen und 8 PSK/2AM-Modulation bietet eine Kapazität von 4x2x2,4 Mbit/s = 19,2 Mbit/s. Bei Berücksichtigung der 0,2 MHz-Lücken, wenn 4 COFDM-Pakete in einem 7 MHz-Kanalraster gepackt werden, ist das System direkt vergleichbar mit den bei ATTC in USA eingereichten Vorschlägen für digitales terrestrisches HDTV-Fernsehen (Fig. 18).

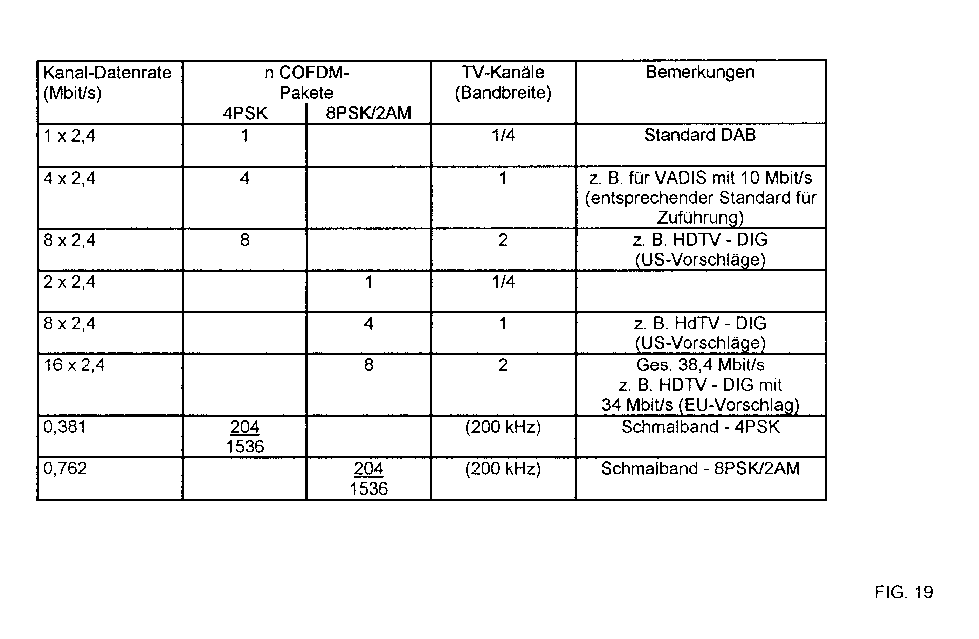

In Fig. 19 sind die Möglichkeiten bei Einsatz von 4 PSK bzw. 8 PSK/2AM angegeben. Insbesondere der Ansatz mit 8 PSK/2AM und 2 TV-Kanälen bietet eine Kapazität von 38,4 Mbit/s. Dies ist ausreichend für die HDTV-Vorschläge aus Europa mit 34 Mbit/s-Basisbandcodierung.

Der Einsatz einer höheren Datenkapazität hat eine wichtige Anwendung in Schmalbandsystemen mit einer Bandbreite von z.B. 200 kHz. Dies wird z.B. in den USA zur Übertragung eines Stereosignals eingesetzt (Inband-Lösung).

Bei Einsatz des DAB-Systems mit 4 PSK-Modulation ergibt sich:
1536 Träger/2,4 Mbit/s 1,5625 kbit/s pro Träger
1,5 MHz Bandbreite/1536 Träger 0,977 kHz/Trägerabstand
Bei 200 kHz-Bandbreite ergeben sich 204 Träger und eine Datenrate (4 PSK) von 318 kbit/s. Werden für MUSICAM 96 kbit/s pro Monosignal angesetzt, ergibt sich eine Kanalcodierung von $\frac{192 \text{kbit/s}}{381 \text{kbit/s}}$ entsprechend 1:1,65.

Dies ist für DAB - Inband-Vorschläge aus den USA (ACORN-DAB) ausreichend, in Anbetracht von DAB nach Eureka 147 mit der Kanalcodierung 1:2 und in Anbetracht des Schmalbandansatzes (Mehrwegeempfang, Frequenz-Interleaving) zu gering.
Durch Einsatz von z.B. 8 PSK/2AM bzw. 16 QAM ergibt sich eine Kanalcodierung von 1:3,31. Damit erhöht sich die Realisierungschance von Schmalband - DAB (abgesehen des Problems Mehrwegeempfang) bzw. besteht der Ansatz zur erhöhten Kapazität für Mehrwertdienste.

Auf dem Gebiet der Videocodierung werden derzeit insbesondere in den USA große Fortschritte erzielt. ISO-MPEG standardisiert eine Bildcodierung mit 1,5 Mbit/s und eine Bildcodierung mit 10 Mbit/s im Projekt VADIS mit D2-MAC Qualität, Bildformat 16:9. Eine Codierung in HDTV-Qualität mit 20 Mbit/s incl. Kanalcodierung ist erreichbar. Damit ist z.B. ein System der digitalen terrestrischen Bewegtbildübertragung für mobilen, portablen oder stationären Empfang sowie für CATV- oder Sat-Systeme, beispielsweise für 4 Qualitätsstufen möglich.

- Videotelefon mit 64 kBit/s
- Watchman-Qualität (z.B. 1,5 Mbit/s)
- PAL-Plus/D2-MAC-Qualität, Format 16:9 mit 10 Mbit/s

bis hin zu

- HDTV-Qualität mit max. 19,2 Mbit/s (incl. Kanalcodierung)
- HDTV-Qualität mit 34 Mbit/s Basisbandcodierung (38,4 Mbit/s gesamt).

Die TV-Tonübertragung mit z.B. bis zu sechs Sprachen ist natürlich nach dem DAB-Verfahren bzw. MUSICAM gegeben. Eine Mischtechnik DAB und Digital Video Broadcast, DVB, kann realisiert werden und führt zu einem Universalempfänger.

Neben zeitabhängigen "Daten" wie Sprache/ Musik (DAB) und Bewegtbild (DVB), können natürlich Applikationen der Datentechnik, mit zeitunabhängigen Daten wie z.B. Standbilder oder Mehrwertdienste einfach realisiert werden. Damit entsteht ein digitaler gemeinsamer Rundfunkdienst (DIB, Digital Integrated Broadcasting).

Es gibt die Ideen für:

- Scheckkartensperrung,
- Autodiebstahlsicherung,
- Übertragen von Börsennachrichten,
- Videotext,
- Bildschirmtext

bis hin zu

- Telefonbuch- oder Lexika-Übertragung.

Die bisher genannten Dienste beziehen sich auf Rundfunk, d.h. Punkt zu Multipunkt-Übertragung ohne Adressierung. Nachdem die Datenkapazität, im Beispiel 19,2 Mbit/s, enorm hoch ist, sind auch Applikationen mit Adressierung beispielsweise Pay-TV oder Applikationen für Funkruf, z.B. Radio Paging denkbar.

Zum Thema DAB mit Satellitendirektempfang bzw. Empfang in Städten und abgeschirmten Tälern über sog. Gap-Filter (Empfang und Wiederaussendung auf derselben Frequenz) ist folgendes anzumerken:

Die entwickelten Überlegungen gelten auch für ein DAB-System mit einem gegebenenfalls von der WARC'92 zugewiesenen 1,5 GHz- oder 2,6 GHz-Kanal für Satelliten-Rundfunk bzw. auch terrestrischen Rundfunk (1,5 GHz). Da die Frequenzen bei 1,5 GHz jetzt nicht frei sind, und sowohl für 1,5 GHz als auch für 2,5 GHz ein geeigneter Satellit nicht zur Verfügung steht (Kosten ca. 0,5 Mrd.DM), hat die Einführung eines derartigen Systems voraussichtlich in den nächsten 10 Jahren keine Chance. Dennoch sei vermerkt, daß die entwickelten Überlegungen mit einem System mit z.B. 8 COFDM-Paketen und einer Bruttodatenkapazität von 19,2 Mbit/s für Satelliten DAB ebenso gelten.

Natürlich kann das System mit einem Frequenz-Abstand von 0,2 MHz versehenen COFDM-Paketen in 7 MHz TV-Kanälen verbessert werden, indem die für z.B. eine Videoübertragung erforderlichen mehreren COFDM-Kanäle kontinuierlich, d.h. ohne 0,2 MHz-Lücken, erstellt werden. Damit würde sich die Bruttodatenkapazität entsprechend erhöhen.

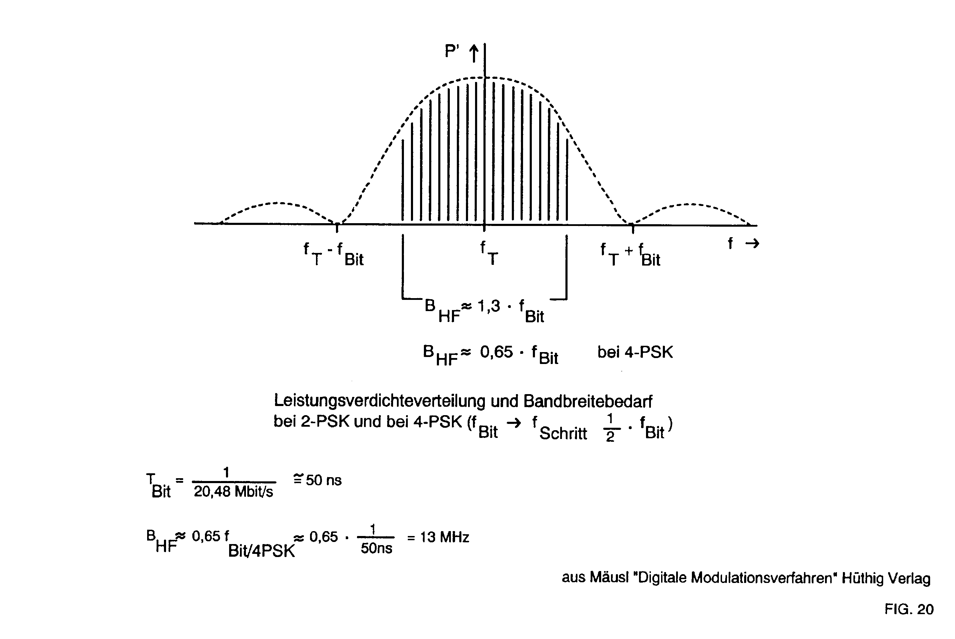

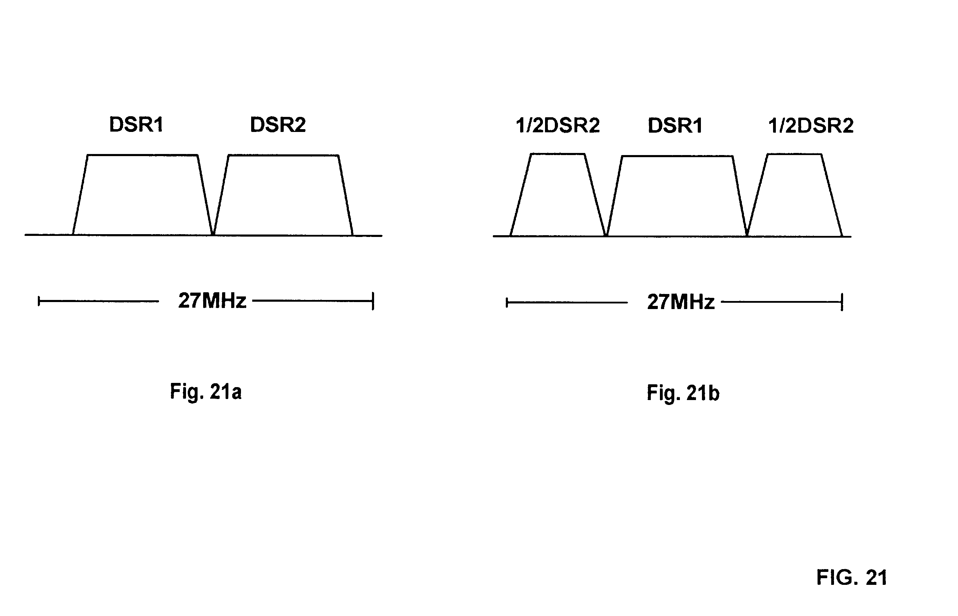

Die beschriebenen Überlegungen zielen u.a. auf die Nutzung und Adaption des eingeführten und jetzt mit starkem Consumer-Wachstum belegten DSR-Verfahrens. Dabei wird über einen Transponder das DSR-Signal mit 14 MHz-Bandbreite geführt. Die tatsächliche effektive Bandbreite des DSR-Kanals ist jedoch rechnerisch (Fig. 20) und gemessen ca. 13 MHz. Damit sind zwei DSR-Kanäle auf einem Transponder mit 27 MHz-Bandbreite (bzw. mit 36 MHz-Bandbreite) übertragbar (Fig. 21). Die beiden DSR-Kanäle könnten innerhalb der Transponderbandbreite nebeneinander (Fig. 21a), oder in einer ggf. aufwärts-kompatiblen Lösung, mit der Ergänzung von je 1/2 DSR2 im oberen und unteren freien Teil liegen (Fig. 21b). Dies würde die Zubringerkapazität zu den Sendern des digitalen Rundfunks entsprechend verdoppeln. Eine derartige Anordnung hat über die hier beschriebenen Anwendungen weitere Bedeutung bei DSR, DSR/MUSICAM (das sogenannte DSR Plus-Verfahren) oder DSR/DHDTV (Übertragung von Digital-HDTV über DSR-Kanal).

Die anhand der Fig. beschriebenen Möglichkeiten zur Erhöhung der Übertragungskapazität können auch in geeigneter Kombination gemeinsam angewendet werden, wodurch eine entsprechend größere Übertragungskapazität erreicht wird.

So kann beispielsweise die Lösung mit zwei DSR-Kanälen pro Transponder auch für die erfindungsgemäßen Lösungen nach Fig. 10, 11 und 12 benutzt werden.

Die genannten Verfahren stützen sich auf DSR d.h. im Prinzip auf die dort angewandten Satellitenfrequenzen 18/12 GHz und die 4 PSK-Modulation mit einer Bandbreite von 14 MHz für 20,48 Mbit/s. Es ergeben sich damit sehr ökonomische Lösungen, da die gesamte professionelle Übertragungstechnik und auch Konsumer-Empfänger mit der Schnittstelle A/B d.h. 2x10,24 Mbit/s zur Verfügung stehen.

Die genannten Verfahren können aber auch für andere Satellitenfrequenzen eingesetzt werden (Frequenzumsetzung) und auch für andere Modulationsverfahren die eine andere Bandbreite und Bitrate ergeben. D.h. die zur Verfügung stehende Transponder-Bandbreite und das gewählte Modulationsverfahren ergeben eine übertragbare Datenrate, die dann wie sinngemäß für DSR beschrieben auf die DAB-Datenraten an definierten Schnittstellen über rechnergestützte Multiplexer adaptiert wird.

Aus Sicht der Struktur der Rundfunkanstalten mit weitestgehend autarken Netzen zwischen Programmquellen und den Rundfunkteilnehmern ist die Programmzuführung der Quellen aller Rundfunkanstalten (Öffentlich Rechtliche und/oder Private Rundfunkanstalten) zur gemeinsamen Erdefunkstelle als Sendeort zum Satelliten manchmal ein Nachteil. Dies gilt in Hinsicht von Mietkosten für Programmleitungen (z.B. ISDN, DS1) als auch aus funktioneller und betrieblicher Sicht.

Eine Alternative stellt das sog. SCPC-Verfahren (Single Channel Per Carrier) dar, bei dem ein Satellitentransponder von mehreren Erdefunkstellen angesteuert wird.

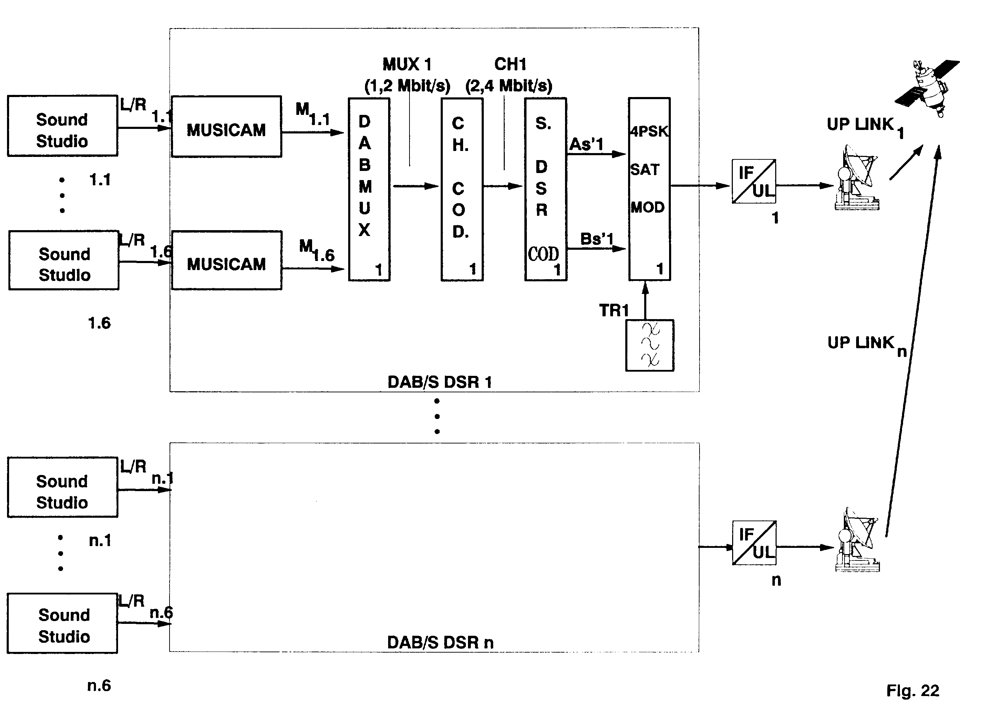

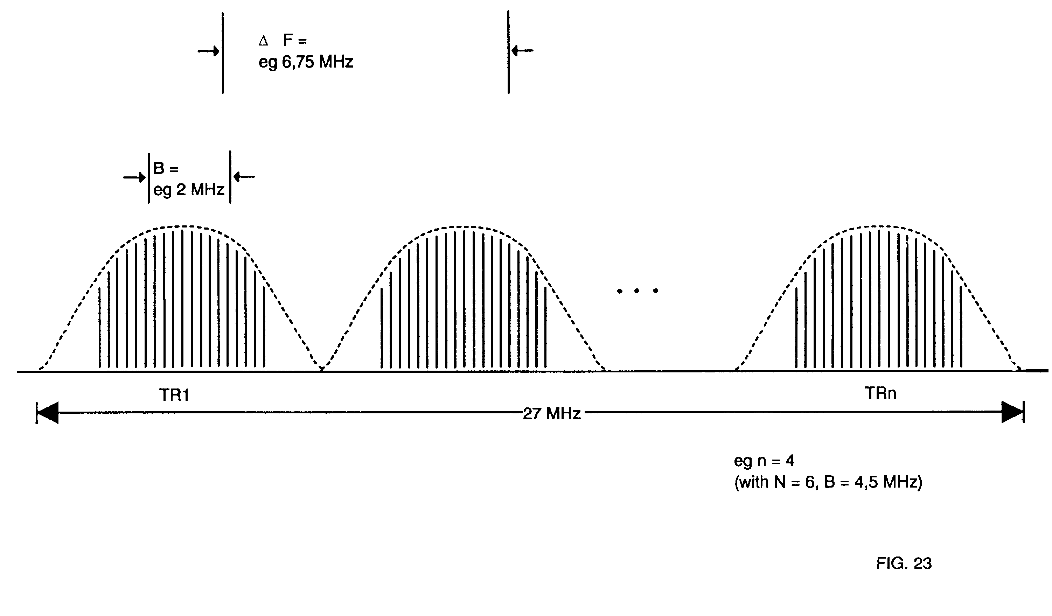

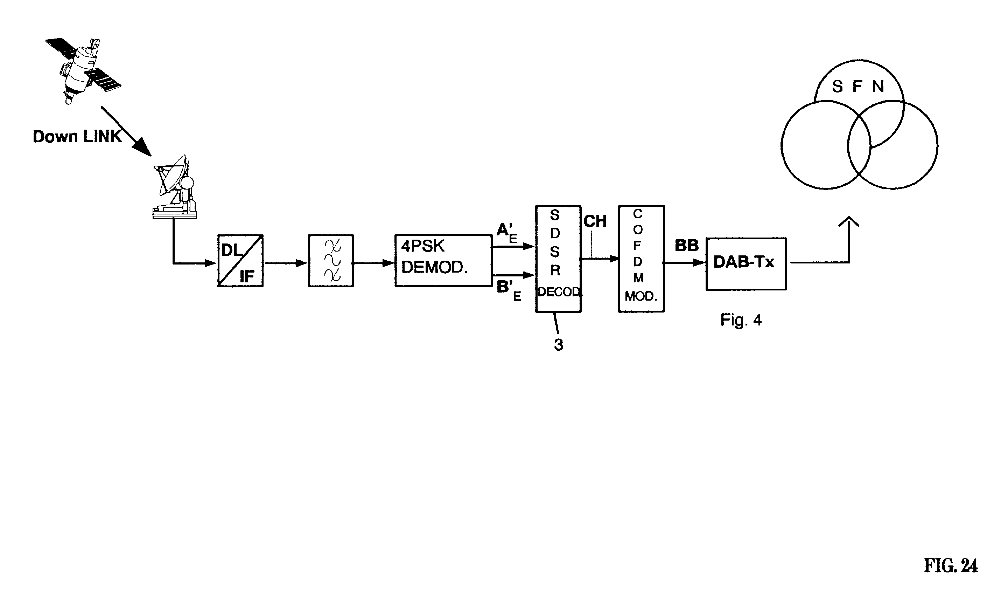

Das Satellitensignal besteht dann aus der Summe der Eingangssignale. In Verbindung mit dem SCPC-System kann ein hier als Schmalband-DSR (SDSR) bezeichnetes System aufgebaut werden. In Fig. 22 wird zunächst ein DAB-Signal mit MUSICAM, DAB-Multiplexer und Kanalcoder aufgebaut. Das Signal CH mit 2,4 Mbit/s wird über einen Zusatzrahmen in dem Block SDSR zu den Signalen $A_{s1}$ und $A_{s2}$ mit z.B. 2x1,5 Mbit/s aufgebaut. Danach folgt ein DSR-4PSK-Modulator und die UPLINK. Das Sendesignal hat eine Bandbreite basierend auf Fig. 20 von z.B. 2 MHz. Die Anzahl n solcher Erdefunkstellen speisen den Satelliten, so daß sich auf dem Transponder eine Struktur gemäß Fig. 23 ergibt. An der DAB-Sendestation wird gemäß Fig. 24 ein SDSR-Block gefiltert, 4PSK-demoduliert und über den COFDM-Modulator dem eigentlichen DAB-Sender zugeführt (statt 4PSK kann auch hier z.B. 8PSK/2AM oder 16 QAM eingesetzt werden).

Auf diese Weise können mit n=4 insgesamt 24 Programme übertragen werden. Mit n=6 ergeben sich 36 Programme. Die Schnittstellen A'/B' können als transparent betrachtet werden und somit kann die Übertragung auch auf der Basis anderer Datenebenen (z.B. MUX) oder Programmzahlen (als z.B. 6) erfolgen.

Mit diesem Verfahren sind auch die Forderungen nach Scrambling z.B. auf der MUSICAM-Ebene oder Zugriffsschutz z.B. nach der EUROCRYPT-Norm über den Block SDSR einfach erfüllbar.

Das gezeigte Verfahren kann auch mit anderen Diensten (z.B. Fernsehen) kombiniert werden, wenn entsprechende Lücken (z.b. 2 MHz) vorhanden sind.

Das DSR-Verfahren ist sehr frequenzökonomisch, da es die Bruttodatenrate von 20,48 Mbit/s in einen 14 MHz breiten Übertragungskanal überträgt (1,46 bit/s pro Hz). Auch DAB arbeitet mit 4PSK-Modulation, jeweils auf 1536 Träger (4x2,4 Mbit/s pro 7 MHz = 1,37 bit/s pro Hz). Verschiedene Veröffentlichungen und andererseits Fortschritte bei der Chip-Integration zeigen auf eine effizientere Modulationstechnik. Bei der Trellis-Codierten Modulation (TCM) wird eine höhere PSK, z. B. 8, 16 oder 32 PSK oder höhere QAM, z.B. 16, 32, 64 QAM angewendet.

TCM ist eine kombinierte Codierungs- und Modulationstechnik für digitale Übertragung in bandbegrenzten Kanälen. Der Hauptvorteil liegt darin, daß TCM einen signifikanten sog. Modulationsgewinn gegenüber herkömmlichen Modulationsarten bei vergleichbarer Bandbreite bringt. Während im Sender ein spezieller Finite-State

Encoder eingesetzt wird, findet die Decodierung im Empfänger über einen sogenannten Soft Decision Maximum-Likelihood Sequence Decoder statt. Die Empfindlichkeit gegenüber additivem Rauschen bei einfachen Four-State TCM kann um 3 dB gegenüber uncodierter Modulation verbessert werden. Eine komplexere TCM erreicht 6 dB und dies bei gleicher Bandbreite und gleicher effektiver Datenrate (Lit: Trellis-Coded Modulation with Redundant Signal Sets, Ungerböck IEEE Communications Magazine Febr. 1997-Vol.25.No.2).

Die Technik der Trellis-Modulation und Viterbi-Decodierung könnte auch insofern auf das DSR- und DAB-Verfahren im Zusammenhang mit dem hier betrachteten digitalen terrestrischen Rundfunk aufsetzen, als der Modulatorteil adaptiert und am Empfangsteil der Viterbi-Decoder an geeigneter Stelle des 4PSK-Demodulators angeschlossen wird. Die Trellis-Codierung in Verbindung mit OFDM (Orthogonal Frequency Division Multiplexing) ist insbesondere für digitales terrestrisches Fernsehen interessant. Der Zusatzaufwand des Viterbi-Decoders im Verhältnis zum Empfänger ist bei TV in höherem Maße gerechtfertigt als beim Hörfunk.

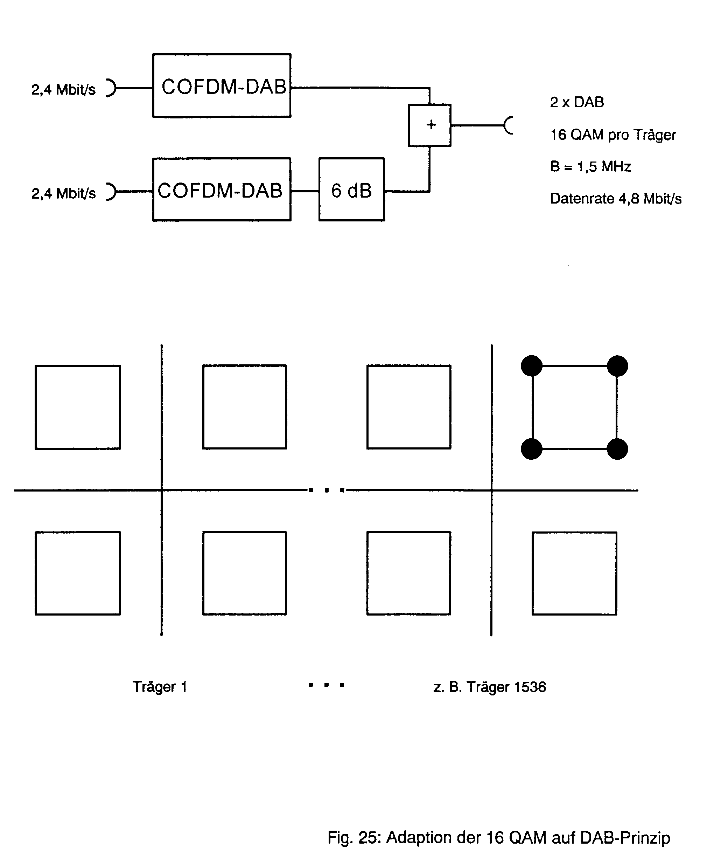

Fig. 25 bis 28 zeigen einige Beispiele für weitere mögliche höherwertige Modulationsarten mit mehr als vier Phasenlagen, die anstelle des in Fig. 14 beschriebenen 8PSK/2AM-Modulationsverfahrens sowohl für die Erzeugung der COFDM-Pakete als auch für die Übertragung nach dem DSR-Prinzip über Satellit einsetzbar sind und zwar aufgebaut aus handelsüblichen 4PSK-Modulatoren.

Fig. 25 zeigt das sogenannte 16-QAM-Modulationsprinzip (Seite 236 des Buches von Mäusl für Monoträger), angewendet für die Erzeugung der COFDM-Signalpakete nach dem DAB-Prinzip. Es sind hier zwei übliche 4PSK-COFDM-Coder/Modulatoren in einer Addierstufe zusammengefaßt, wobei am Ausgang des einen Coder/Modulators ein 6dB-Dämpfungsglied zwischengeschaltet ist, so daß die beiden Ausgangssignale im Amplitudenverhältnis 1:0,5 summiert werden. Damit werden die beispielsweise 1536 Träger nach dem DAB-Prinzip jeweils mit 12 verschiedenen Phasenlagen und drei Amplitudenzuständen moduliert, wie das zugehörige Trägermodell nach Fig. 25 zeigt, es ist damit also möglich, eine größere Datenmenge zu übertragen.

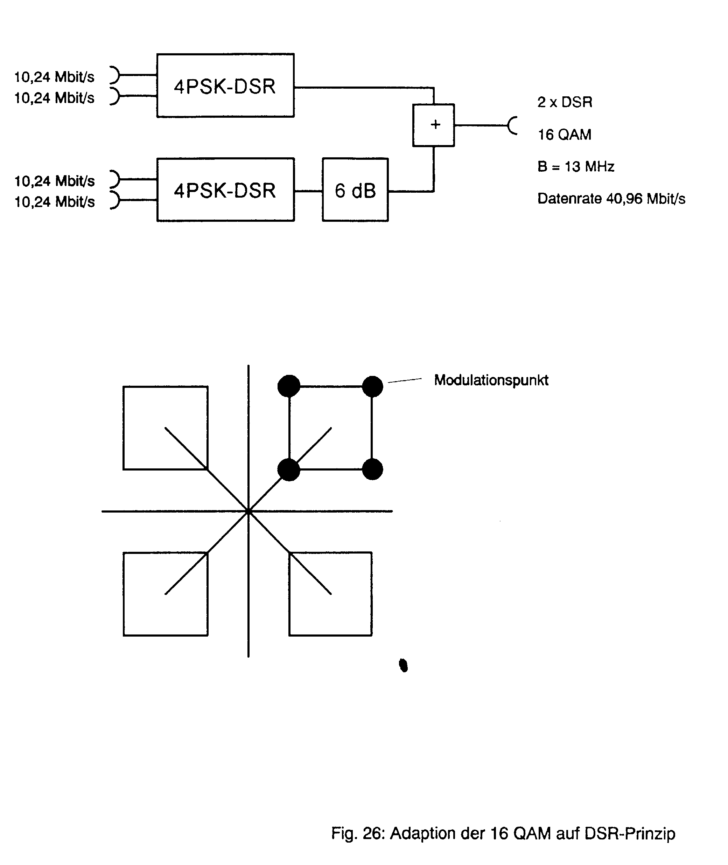

Fig. 26 zeigt die Anwendung dieses 16-QAM-Modulationsprinzips für die Verdoppelung der Datenmenge auf der DSR-Satelliten-Übertragungsstrecke, hier sind wieder zwei übliche 4PSK-DSR-Modulatoren mit ihren Ausgängen im Amplitudenverhältnsi 1:0,5 zusammengefaßt, mit denen der Monoträger der DSR-Strecke moduliert wird.

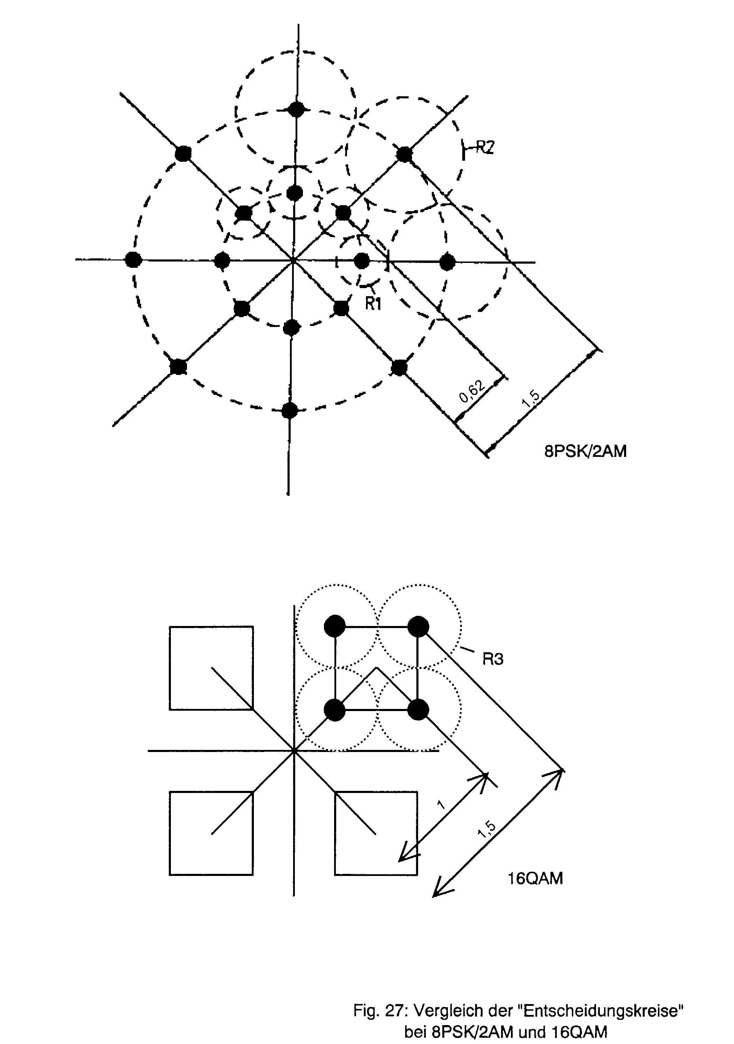

Fig. 27 zeigt den Vergleich der Modulationsart 8PSK/2AM (Fig. 14) und der 16-QAM-Modulation nach den Fig. 25 und 26. Daraus ergibt sich, daß das 16-QAM-Verfahren bezüglich des C/N-Verhältnisses vorteilhafter ist, das 8PSK-2AM-Verfahren besitzt andererseits Vorteile bei nichtlinearen Übertragungssystemen, da nur zwei Amplitudenstufen vorgesehen sind gegenüber den drei Amplitudenstufen beim 16-QAM-Verfahren und nur acht Phasenlagen gegenüber den zwölf Phasenlagen beim 16-QAM-Verfahren.

Aus Fig. 27 ergibt sich, daß beim 8PSK/2AM-Verfahren unterschiedlich große Entscheidungsschwellen vorhanden sind, dies kann jedoch durch entsprechende Berücksichtigung bei der vorgeschalteten Kanalcodierung ausgeglichen werden. Die Modulationspunkte auf dem inneren Kreis werden mit einem höheren Fehlerschutz versehen als die auf dem äußeren Kreis. Im Ergebnis wird dadurch dieselbe Fehlerschutz-Bitrate wie beim QAM-Verfahren erreicht mit der Einschränkung, daß für den ungleichen Fehlerschutz ein sehr geringer Anteil zur Organisation verwendet werden muß.

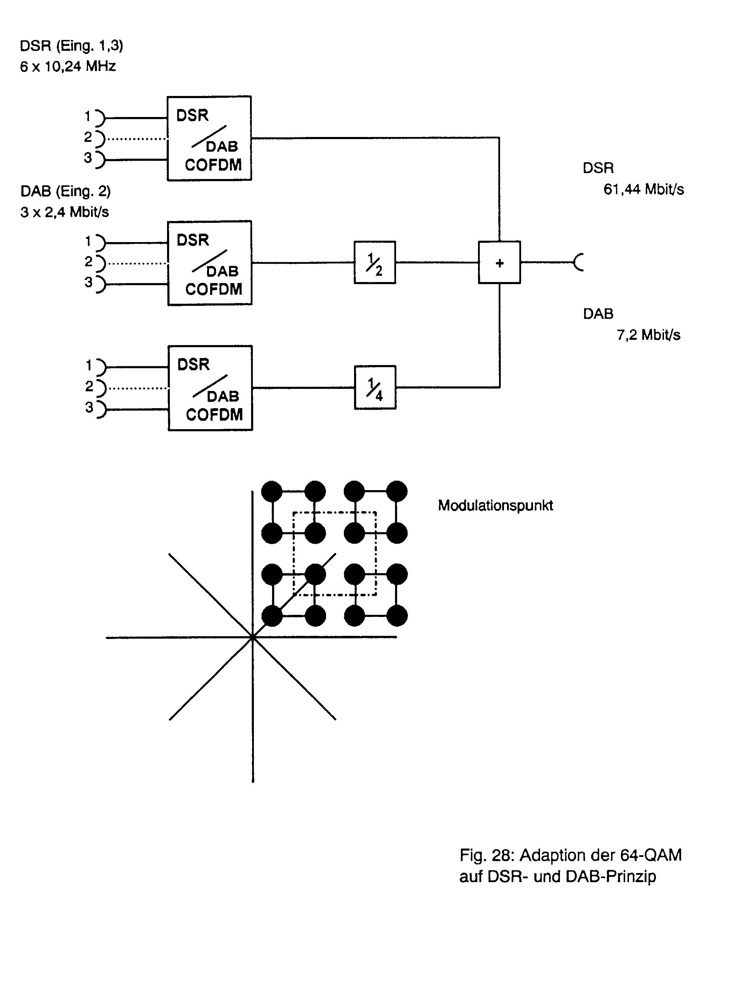

Fig. 28 zeigt die Realisierung eines 64-QAM-Modulators, wie er wiederum sowohl für DSR (Monoträger) als auch für DAB (Vielfachträger) geeignet ist, hier werden drei handelsübliche DSR-4PSK-Modulatoren bzw. drei handelsübliche DAB-COFDM-Modulatoren im Amplitudenverhältnis 1:0,5:0,25 in einer Addierstufe zusammengefaßt, damit kann eine noch größere Datenmenge übertragen werden. Davon abgeleitet kann eine
32-QAM-Modulation erzeugt werden durch Vorschalten
einer Logik zur Umwandlung von 5 Bit auf 6 Bit.

Allgemein läßt sich ein Modulator höherer Ordnung aus 4PSK-Elementen (Prinzip DSR bzw. DAB)
aufbauen mit den Freiheitsgraden für den Einzelmodulator in der Amplitude durch Einfügen einer Dämpfung,
in der Phase durch Einfügen eines Phasenschiebers
und auch mit dem Freiheitsgrad in der gesamten Datenkapazität durch Vorschalten einer Logik, die eine Auswahl der Modulationspunkte bewirkt.

**Patentansprüche**

1. Nach dem DAB-Prinzip arbeitendes digitales Rundfunk-Sendernetz-System, bei dem die über die einzelnen Sendestationen auszusendenden digitalen
Programme nach entsprechender Datenreduktion
gemäß dem COFDM-Verfahren codiert und moduliert werden,
**dadurch gekennzeichnet,**
daß das System zur Erhöhung der auszusendenden Datenmenge die Daten der auszusendenden
digitalen Programme auf mehrere COFDM-Signalpakete aufteilt und die einzelnen Sendestationen
gleichzeitig jeweils mehrere dieser COFDM-Signalpakete aussenden.

2. Nach dem DAB-Prinzip arbeitendes digitales Rundfunk-Sendernetz-System, bei dem die über die einzelnen Sendestationen auszusendenden digitalen
Programme nach entsprechender Datenreduktion
gemäß dem COFDM-Verfahren codiert und moduliert werden,
**dadurch gekennzeichnet,**
daß das System zur Erhöhung der auszusendenden Datenmenge für die Erzeugung der COFDM-
Signalpakete zwei oder mehr COFDM-Coder mit jeweils 4PSK-Modulatoren benutzt, deren Ausgänge
über Addierstufen so zusammengefaßt sind, daß
eine 8PSK/2AM-, 16QAM- oder 64QAM-Modulation mit mehr als vier Phasenlagen entsteht.

3. System nach Anspruch 1,
**dadurch gekennzeichnet,**
daß gleichzeitig für die Erzeugung der COFDM-Signalpakete zwei oder mehr COFDM-Coder mit jeweils 4PSK-Modulatoren benutzt werden, deren
Ausgänge über Addierstufen so zusammengefaßt
sind, daß eine 8PSK/2AM-, 16QAM- oder 64QAM-
Modulation mit mehr als vier Phasenlagen entsteht.

4. System nach einem der Ansprüche 1 bis 3,
**dadurch gekennzeichnet,**
daß die auszusendenden Programme digitale Tonprogramme und/oder Bildprogramme sind.

5. System nach Anspruch 2, 3 oder 4,
**dadurch gekennzeichnet,**
daß für die Erzeugung der COFDM-Signalpakete
zwei 4PSK-COFDM-Coder/Modulatoren benutzt
werden, die mit um 45° gegeneinander gedrehten
Trägern arbeiten und deren Ausgänge unmittelbar
über eine Addierstufe zusammengefaßt sind
(8PSK/2AM).

6. System nach Anspruch 2, 3 oder 4,
**dadurch gekennzeichnet,**
daß für die Erzeugung der COFDM-Signalpakete
zwei 4PSK-COFDM-Coder/Modulatoren benutzt
werden, deren Ausgangssignale mit einem Amplitudenverhältnis von 1:0,5 in einer Addierstufe zusammengefaßt sind (16QAM-Modulation).

7. System nach Anspruch 2, 3 oder 4,
**dadurch gekennzeichnet,**
daß für die Erzeugung der COFDM-Signalpakete
drei 4PSK-COFDM-Coder/Modulatoren benutzt
werden, deren Ausgangssignale mit einem Amplitudenverhältnis von 1:0,5:0,25 in einer Addierstufe
zusammengefaßt sind (64QAM-Modulation).

8. System nach Anspruch 2, 3 oder 4,
**dadurch gekennzeichnet,**
daß insgesamt acht COFDM-Signalpakete mit jeweils 1,5 MHz Breite in zwei Fernsehband-Kanälen
ausgesendet werden.

9. System nach einem der vorhergehenden Ansprüche,
**dadurch gekennzeichnet,**
daß über mindestens eines der COFDM-Signalpakete ein lokales Rundfunkprogramm abgestrahlt
wird und die Sendernetz-Empfänger über eine
Schaltinformation automatisch auf dieses Lokalprogramm umschaltbar sind.

10. System nach einem der vorhergehenden Ansprüche,
**dadurch gekennzeichnet,**
daß die Datenmenge der auszusendenden Hörfunkprogramme nach einem die psychoakustischen Phänomene des menschlichen Ohres ausnützenden Verfahren (MUSICAM) und die Datenmenge der auszusendenden digitalen Bildprogramme nach einem die psychooptischen Phänomene
des menschlichen Auges ausnutzenden Verfahren
vor Erzeugung der COFDM-Signalpakete entsprechend datenreduziert wird.

11. System nach einem der vorhergehenden Ansprüche 1 bis 10,
**dadurch gekennzeichnet,** daß die Zufuhr der digitalen Programme zu den einzelnen Sendestationen über eine zur Übertragung einer erhöhten Datenmenge abgewandelte DSR-Satelliten-Übertragungsstrecke erfolgt.

12. System nach Anspruch 11,
**dadurch gekennzeichnet,** daß über die Satelliten-Übertragungsstrecke mehrere nach dem DAB-Verfahren aufbereitete COFDM-Signalpakete zu den einzelnen Sendestationen übertragen werden.

13. System nach Anspruch 12,
**dadurch gekennzeichnet,** daß jeweils vier COFDM-Signalpakete (C1 bis C4) zu einem Kanalsignal ($C_s$) zusammengefaßt und mit zwei solchen Kanalsignalen die 90°-Komponenten des ZF-Trägers der Satelliten-Übertragungsstrecke in der Frequenz oder in der Phase moduliert werden (QFM bzw. QPM).

14. System nach Anspruch 11,
**dadurch gekennzeichnet,** daß die digitalen COFDM-Pakete nach dem DSR-Verfahren über die Satelliten-Übertragungsstrecke zu den Sendestationen übertragen werden, bei dem in einem 4-PSK-Modulator ein ZF-Träger moduliert wird, der anschließend in einem Frequenzumsetzer auf die Sendefrequenz der Satelliten-Übertragungsstrecke umgesetzt wird.

15. System nach Anspruch 14,
**dadurch gekennzeichnet,** daß mehrere jeweils 2,4 Mbit-Datenströme aufbereitet nach dem DAB-Verfahren über einen Datenmultiplexer den Eingängen ($A_s$, $B_s$) für die beiden 10,24 Mbit/s Datenströme des 4-PSK-Modulators zugeführt werden.

16. System nach Anspruch 11,
**dadurch gekennzeichnet,** daß mehrere jeweils 1,2 bis 2 Mbit/s-Datenströme aufbereitet über einen Datenmultiplexer den Eingängen für die beiden 10,24 Mbit/s-Datenströme des 4-PSK-Modulators der DSR-Satelliten-Übertragungsstrecke zugeführt werden.

17. System nach Anspruch 11,
**dadurch gekennzeichnet,** daß eine Satelliten-Übertragungsstrecke benutzt wird, bei der eine Modulationsart mit mehr als vier Phasenlagen angewendet wird.

18. System nach Anspruch 17,
**dadurch gekennzeichnet,** daß eine PSK-Modulation mit mehr als vier Phasenlagen benutzt wird (8PSK, 16PSK oder 8PSK/2AM).

19. System nach Anspruch 17,
**dadurch gekennzeichnet,** daß eine Modulation nach dem QAM-Prinzip benutzt wird (16, 32 oder 64 QAM).

20. System nach Anspruch 17 oder 18,
**dadurch gekennzeichnet,** daß ein aus zwei 4-PSK-Modulatoren zusammengesetzter Modulator benutzt wird und den beiden 10,24 Mbit/s Datenstromeingängen dieser beiden 4-PSK-Modulatoren jeweils unmittelbar die entsprechend datenreduzierten Datenströme zugeführt sind (8PSK/2AM oder 16PSK).

21. System nach Anspruch 14,
**dadurch gekennzeichnet,** daß zwei oder mehr DSR-Kanäle auf einem Transponder entsprechender Bandbreite gleichzeitig übertragen werden.

22. System nach einem der vorhergehenden Ansprüche 11 bis 21,
**dadurch gekennzeichnet,**
daß mehrere Datenströme nach dem DAB-Verfahren getrennt aufbereitet, nach einem Schmalband-DSR-Verfahren oder einer PSK-Modulation mit mehr als vier Phasenlagen (8PSK, 16 PSK oder 8 PSK/2AM) oder einer Modulation nach dem QAM-Prinzip moduliert und nach dem Single-Channel-PerCarrier-Verfahren (SCPC) über die Satelliten-Übertragungsstrecke übertragen werden.

23. System nach einem der vorhergehenden Ansprüche 11 bis 22,
**dadurch gekennzeichnet,** daß über die mehreren COFDM-Signalpakete die datenreduzierten Daten eines digitalen Fernsehsignals bis zu HDTV-Qualität übertragen werden.

24. System nach Anspruch 21,
**dadurch gekennzeichnet,** daß zwei oder mehr Daten ströme nach dem DSR-Verfahren oder einer PSK-Modulation mit mehr als vier Phasenlagen (8PSK, 16 PSK oder 8PSK/2AM) oder einer Modulation nach dem QAM-Prinzip getrennt aufbereitet und moduliert werden und nach dem SCPC-Verfahren über die Satelliten-Übertragungsstrecke übertragen werden.

## Claims

1. Digital broadcasting transmitter network system operating on the DAB principle, in which the digital programmes that are to be transmitted via the various transmitting stations are encoded and modulated in accordance with the COFDM method following corresponding data reduction,
**characterised in that** the system for increasing the quantity of data to be transmitted divides up the data of the digital programmes that are to be transmitted into a plurality of COFDM signal packets and the various transmitting stations simultaneously each transmit a plurality of these COFDM signal packets.

**2.** Digital broadcasting transmitter network system operating on the DAB principle, in which the digital programmes that are to be transmitted via the various transmitting stations are encoded and modulated in accordance with the COFDM method following corresponding data reduction,
**characterised in that** for the generation of the COFDM signal packets the system for increasing the quantity of data to be transmitted utilises two or more COFDM encoders, each with 4PSK modulators, the outputs of which are combined via adding stages in a manner resulting in BPSK/2AM, 16QAM or 64QAM modulation with more than four phase positions.

**3.** System as claimed in Claim 1,
**characterised in that** for the generation of the COFDM signal packets two or more COFDM encoders are simultaneously utilised, each with 4PSK modulators, the outputs of which are combined via adding stages in a manner resulting in 8PSK/2AM, 16QAM or 64QAM modulation with more than four phase positions.

**4.** System as claimed in any of claims 1 to 3,
**characterised in that** the programmes that are to be transmitted are digital sound programmes and/ or video programmes.

**5.** System as claimed in claim 2, 3 or 4,
**characterised in that** for the generation of the COFDM signal packets two 4PSK COFDM encoders/modulators are utilised which operate with carriers rotated through 45° relative to one another and the outputs of which have been directly combined via an adding stage (8PSK/2AM).

**6.** System as claimed in claim 2, 3 or 4,
**characterised in that** for the generation of the COFDM signal packets two 4PSK COFDM encoders/modulators are utilised whose output signals are combined in an amplitude ratio of 1:0.5 in an adding stage (16QAM modulation).

**7.** System as claimed in claim 2, 3 or 4,
**characterised in that** for the generation of the CODFM signal packets three 4PSK COFDM encoders/modulators are utilised whose output signals are combined in an amplitude ratio of 1:0.5:0.25 in an adding stage (64QAM modulation).

**8.** System as claimed in claim 2, 3 or 4,
**characterised in that** a total of eight COFDM signal packets each of 1.5 MHz width are transmitted in two TV band channels.

**9.** System as claimed in any of the preceding claims,
**characterised in that** a local broadcast programme is beamed out via at least one of the COFDM signal packets and the transmitter network receivers are adapted to be automatically switched over to this local programme via a switching bulletin.

**10.** System as claimed in any of the preceding claims,
**characterised in that** prior to the generation of the COFDM signal packets, the quantity of data from the radio programmes that are to be transmitted is data-reduced accordingly by a process (MUSICAM) that exploits the psycho-acoustic phenomena of the human ear, and the quantity of data from the digital video programmes that are to be transmitted is data-reduced accordingly by a process that exploits the psycho-optical phenomena of the human eye.

**11.** System as claimed in any of the preceding claims 1 to 10,
**characterised in that** the digital programmes are supplied to the various transmitting stations via a DSR satellite transmission link that has been modified for the transmission of an increased quantity of data.

**12.** System as claimed in claim 11,
**characterised in that** a plurality of COFDM signal packets processed by the DAB method are transmitted via the satellite transmission link to the various transmitting stations.

**13.** System as claimed in claim 12,
**characterised in that** four COFDM signal packets (C1 to C4) are in each case combined into a channel signal ($C_s$) and with two such channel signals the 90° components of the satellite transmission link's IF carrier are frequency or phase modulated (QFM or QPM respectively).

**14.** System as claimed in claim 11,
**characterised in that** the DSR method is used to transmit the digital COFDM packets to the transmitting stations via the satellite transmission link, which involves modulating an IF carrier in a 4PSK modulator and subsequently converting the IF carrier in a frequency converter to the transmitting frequency of the satellite transmission link.

**15.** System as claimed in claim 14,
**characterised in that** a plurality of respective 2.4 Mbit data streams processed by the DAB method are sent via a data multiplexer to the inputs ($A_s$, $B_s$) for the two 10.24 Mbit/s data streams of the 4PSK modulator.

**16.** System as claimed in claim 11,
**characterised in that** a plurality of respective 1.2 to 2 Mbit/s data streams processed via a data multiplexer are sent to the inputs for the two 10.24 Mbit/s data streams of the 4PSK modulator of the DSR satellite transmission link.

17. System as claimed in claim 11,
**characterised in that** a satellite transmission link is utilised in which a type of modulation involving more than four phase positions is employed.

18. System as claimed in claim 17,
**characterised in that** PSK modulation with more than four phase positions is utilised (8PSK, 16PSK or 8PSK/2AM).

19. System as claimed in claim 17,
**characterised in that** modulation based on the QAM principle is utilised (16, 32 or 64 QAM).

20. System as claimed in claim 17 or 18,
**characterised in that** a modulator composed of two 4-PSK modulators is utilised and the correspondingly data-reduced data streams (8PSK/2AM or 16PSK) are sent directly in each case to the two 10.24 Mbit/s data stream inputs of these two 4PSK modulators.

21. System as claimed in claim 14,
**characterised in that** two or more DSR channels are simultaneously transmitted on a transponder of corresponding bandwidth.

22. System as claimed in any of the preceding claims 11 to 21,
**characterised in that** a plurality of data streams are separately processed by the DAB method, modulated using a narrow-band DSR method or PSK modulation with more than four phase positions (8PSK, 16 PSK or 8 PSK/AM) or modulation based on the QAM principle, and transmitted via the satellite transmission link using the SCPC method (single channel per carrier).

23. System as claimed in any of the preceding claims 11 to 22,
**characterised in that** via the plurality of COFDM signal packets the data-reduced data of a digital television signal are transmitted with up to HDTV quality.

24. System as claimed in claim 21,
**characterised in that** two or more data streams are separately processed and modulated using the DSR method or PSK modulation with more than four phase positions (8PSK, 16PSK or 8PSK/2AM) or a modulation based on the QAM principle, and are transmitted via the satellite transmission link using the SCPC method.

**Revendications**

1. Système de réseau d'émetteurs radiophoniques, numériques, fonctionnant selon le principe DAB, selon lequel les programmes numériques, destinés à être émis par les différents émetteurs, sont codés après réduction des données, selon le procédé COFDM et sont modulés,
caractérisé en ce que
pour augmenter la quantité de données à émettre, le système répartit les données des programmes numériques à émettre entre plusieurs paquets de signaux COFDM, et les différentes stations d'émission émettent simultanément plusieurs de ces paquets de signaux COFDM.

2. Système de réseau d'émetteurs radiophoniques, numériques, fonctionnant selon le principe DAB, selon lequel les programmes numériques, destinés à être émis par les différentes stations d'émission, sont codés après réduction des données, selon le procédé COFDM et sont modulés,
caractérisé en ce que
pour augmenter la quantité de données à émettre, pour générer les paquets de signaux COFDM, le système utilise deux ou plusieurs codeurs COFDM avec chaque fois des modulateurs 4PSK dont les sorties sont réunies par des étages additionneurs, et en ce qu'on effectue une modulation 8PSK/2AM, 16QAM ou 64QAM avec plus de quatre phases.

3. Système selon la revendication 1,
caractérisé en ce qu'
en même temps, pour générer les paquets de signaux COFDM, on utilise deux ou plusieurs codeurs COFDM avec chaque fois des modulateurs 4PSK dont les sorties sont réunies par des étages additionneurs pour obtenir une modulation 8PSK/2AM, 16QAM ou 64QAM, avec plus de quatre phases.

4. Système selon l'une des revendications 1 à 3,
caractérisé en ce que les programmes à émettre sont des programmes son, numériques, et/ou des programmes d'images.

5. Système selon les revendications 2, 3 ou 4,
caractérisé en ce que
pour générer les paquets de signaux COFDM, on utilise deux codeurs/moduleurs 4PSK-COFDM, avec des porteuses tournées de 45° et dont les sorties sont reliées directement par un étage additionneur (8PSK/2AM).

6. Système selon les revendications 2, 3, 4,
caractérisé en ce que
pour générer les paquets de signaux COFDM, on utilise deux codeurs/moduleurs 4PSK-COFDM, dont les signaux de sortie sont réunis dans un étage additionneur, selon un rapport d'amplitudes 1:0,5 (modulation 16QAM).

7. Système selon les revendications 2, 3 ou 4, caractérisé en ce que
pour générer les paquets de signaux COFDM, on utilise trois codeurs/modulateurs 4PSK-COFDM dont les signaux de sortie sont réunis dans un étage additionneur (modulation 64QAM), selon un rapport d'amplitudes 1:0,5:0,25.

8. Système selon les revendications 2, 3, 4, caractérisé en ce qu'
il émet en tout huit paquets de signaux COFDM d'une largeur respective de 1,5 MHz dans deux canaux vidéo.

9. Système selon l'une des revendications précédentes,
caractérisé en ce que
par l'un des paquets de signaux COFDM, on émet un programme radio local, et les récepteurs du réseau d'émetteurs peuvent être commutés automatiquement sur ce programme local par une information de commutation.

10. Système selon l'une quelconque des revendications précédentes,
caractérisé en ce que
la quantité de données des programmes audio à émettre est réduite selon un procédé (MUSICAM) utilisant les phénomènes psychoacoustiques de l'oreille humaine, et les quantités de données du programme vidéo, numérique, à émettre, sont réduites selon un procédé utilisant les phénomènes psychooptiques de l'oeil humain pour générer les paquets de signaux COFDM.

11. Système selon l'une des revendications 1 à 10, caractérisé en ce que
l'application des programmes numériques à l'une des stations d'émission se fait par un chemin de transmission par satellites DSR modifié pour transmettre une quantité augmentée de données.

12. Système selon la revendication 11, caractérisé en ce que
des chemins de transmission par satellites transmettent plusieurs paquets de signaux COFDM, préparés selon le procédé DAB, vers les différentes stations d'émission.

13. Système selon la revendication 12, caractérisé en ce qu'
il réunit chaque fois quatre paquets de signaux COFDM (C1-C4) en un signal de canal ($C_s$) et assure la modulation en fréquence ou en phase avec de tels signaux de canal, des composantes à 90° de la porteuse de fréquence intermédiaire du chemin de transmission par satellites (QFM ou QPM).

14. Système selon la revendication 11, caractérisé en ce que
les paquets COFDM numériques sont transmis selon le procédé DSR par des chemins de transmission par satellites vers les stations d'émission, en modulant une porteuse de fréquence intermédiaire dans un modulateur 4PSK, avec conversion consécutive dans un convertisseur de fréquence à la fréquence d'émission du chemin de transmission par satellites.

15. Système selon la revendication 14, caractérisé en ce qu'
il prépare plusieurs flux de données à chaque fois 2,4 Mbit selon le procédé DAB, par un multiplexeur de données pour les appliquer aux entrées ($A_s$, $B_s$) pour les deux flux de données à 10,24 Mbit/s du modulateur 4-PSK.

16. Système selon la revendication 11, caractérisé en ce qu'
il prépare chaque fois plusieurs flux de données à 1,2-2 Mbit/s pour les envoyer par un multiplexeur de données aux entrées des deux flux de données à 10,24 Mbit/s du modulateur 4-PSK du chemin de transmission par satellites DSR.

17. Système selon la revendication 11, caractérisé en ce qu'
il utilise un chemin de transmission par satellites appliquant un type de modulation à plus de quatre positions de phase.

18. Système selon la revendication 17, caractérisé en ce qu'
il utilise une modulation PSK à plus de quatre positions de phase (8PSK, 16PSK, 8PSK/2AM).

19. Système selon la revendication 17, caractérisé en ce qu'
il utilise une modulation selon le principe QAM (16, 32, 64 QAM).

20. Système selon les revendications 17 ou 18, caractérisé en ce qu'
il utilise un modulateur composé de deux modulateurs 4-PSK et réunit les deux entrées de flux de données à 10,24 Mbit/s des deux modulateurs 4-PSK, chaque fois directement, pour recevoir les flux de données réduites correspondantes (8PSK/2AM ou 16PSK).

21. Système selon la revendication 14, caractérisé en ce qu'

il transmet deux ou plusieurs canaux DSR simultanément sur une largeur de bande correspondant à un transpondeur.

22. Système selon l'une des revendications précédentes 11 à 21,
caractérisé en ce qu'
il prépare séparément plusieurs flux de données selon le procédé DAB, selon un procédé DSR à bande étroite ou une modulation PSK à plus de quatre phases (8PSK, 16PSK ou 8PSK/2AM), ou une modulation selon le principe QAM, et assure la transmission selon le procédé de la porteuse unique par canal unique (Single-Channel-Per Carrier) (SPC), par le chemin de transmission par satellites.

23. Système selon l'une des revendications précédentes 11 à 22,
caractérisé en ce qu'
il transmet, par plusieurs paquets de signaux COFDM, les données réduites d'un signal vidéo numérique jusqu'à la qualité HDTV.

24. Système selon la revendication 21,
caractérisé en ce qu'
il prépare séparément deux ou plusieurs flux de données selon le procédé DSR ou une modulation PSK à plus de quatre phases (8PSK, 16 PSK ou 8PSK/2AM), ou une modulation selon le principe QAM, et module puis transmet selon le procédé SPC par des chemins de transmission par satellites.

FIG. 1

DAB Principle — DSR Principle

Labels: SOUND STUDIO (A), SOURCE CODER (K1), SOURCE CODER (K2), VISION STUDIO (TV), SAT.Tx (UL), SAT.Rx (E1), COD/MOD (M1), S1, SAT.Rx (En), COD/MOD (Mn), Sn

EP 0 591 643 B1

TV - CH I

TV - CH II

eg 1536
CARR.
4PSK

| 1 | | 2 | | 3 | | 4 |

| 5 | | 6 | | 7 | | 8 |

1,5 MHz        0,2 MHz

7 MHz (VHF)
8 MHz (UHF)

7 (8) MHz

FIG. 2

FIG. 3

UP LINK
(30GHZ)

FMS

DIG. LINE   MUX   CH
(ISDN)  (1,2Mb/s) (2,4Mb/s)

SOUND
STUDIO 1

L/R 1

MUSICAM

$M_1$

$M_1$

$M_6$

D
A
B
M
U
X

1

S

C
H.
C
O
D.

2

R

I
F
F
T

2048

$J_D$

$Q_D$

D / A

D / A

$J_A$

$Q_A$

90°

FCARR.

COFDM

3

$C_1$

f1 / f2

$C'_1$

+

$C_4$

f1 / f2'

$C'_4$

$C'_2$

$C'_3$

+

$C_5$

FM

5

UL
IF

6

FIG. 4

EP 0 591 643 B1

SFN

D - COFDM

| CF / BB | C SEL. | DMUX | DEMOD | M SEL. | D MUSICAM | L/R SEL. | ▷ |

CARR. SEL.

SOUND SEL.

PROGRAM SEL.

Fig. 5

FIG. 6

FIG. 7

Fig. 8

**Down LINK (20GHZ)**

**118/70MHz +/-7MHz**

**DSR - RECEIVER**

SAT. TUNER | DL / IF

Q

4PSK-DEMOD

AE
BE

2*10,24Mbit/s

CH.-DECOD

DSR-DEMUX

Sel.

D/A

CABLE NETWORK CATV

CONSUMER REC.

FIG. 9

EP 0 591 643 B1

FIG. 10

EP 0 591 643 B1

33

R

CH1

CH8

MUX

As

Bs

TR.

4PSK MOD.

IF / UL

P

35

32

34

DL / IF

4PSK DEMOD.

AE

BE

DEMUX

CH1

CH8

CH. SEL.

COFDM MOD.

DAB Tx

36

37

3

CD

BB

NEW

I

II

AE

BE

COFDM MOD.

3'

Fig. 4

S F N

27

Fig. 3

NEW

Fig. 8

DSR

Fig. 9

FIG. 11

FIG. 12

FIG. 13

FIG. 14

| Bitrate (Mbit/s) | n.PSK n= | Bandbreite (MHz) | Anzahl TV-Kanäle | Bemerkungen |
|---|---|---|---|---|
| 2 x 10,24 | 4 | ± 7 | 2 | jetziger Standard |
| 4 x 10,24 | 16/8PSK/2AM | ± 7 | 2 | doppelte Datenrate |
| 4 x 5,12 | 16/8PSK/2AM | ± 3,5 | 1 | nur 1 TV-Kanal |
| 2 x 5,12 | 4 | ± 3,5 | 1 | halbe Datenrate |

EP 0 591 643 B1

FIG. 15

Fig. 16

4PSK Mod. 1

4PSK Mod. 2

8PSK / 2AM

EP 0 591 643 B1

DAB-Kennzahlen: 2,4 Mbit/s    Eingangsdatenrate
                256 ms        Schutzintervall
                1536          Träger
                1,5 MHz       Bandbreite

---

4PSK:

$$\frac{1,5\ MHz}{1536\ Träger} = 0,977\ kHz/Träger \cong 1,024\ ms\ Periode$$

$$1,024\ ms + 256\ \mu s = 1,26\ ms\ Symboldauer$$

Wegen 4PSK $\Rightarrow$ 640 $\mu s$          wegen 8PSK/2AM $\Rightarrow$ 320 $\mu s$

$$\frac{1536\ Träger}{640\ \mu s} \Rightarrow 2,4\ Mbit/s \qquad \frac{1536\ Träger}{320\ \mu s} \Rightarrow 4,8\ Mbit/s$$

FIG. 17

EP 0 591 643 B1

## Table 3 - Transmission Characteristics

| | Narrow MUSE | DigiCipher | DSC-HDTV | AD-HDTV | CC-DigiCipher |
|---|---|---|---|---|---|
| Encoder Input Video Data Rate (Mb/s) | 246.344 | 405.0985 | 745.7495 (9 bits used per pixel) | 517.8816 | 1.325.7769 |
| Compressed Video Data Rate (w/o FEC) | 4.86 MHz Analog Baseband | 18.24 Mb/s (13.34 Mb/s w/16-QAM option) | 8.46-16.92 Mb/s Variable Rate | 17.73 Mb/s | 19.26 Mb/s (estimate) |
| Compression Ratio | 5.49:1 | 22.21:1 | 44.08-88.15:1 | 29.21:1 | 68.85 |
| Modulation | Split-Channel VSB-AM/SSB-AM | 32-QAM (16-QAM option) | Dispersed 4-VSB/2-VSB | Spectrally Shaped QAM (32-QAM) | 32 QAM (16 QAM option) |

Data derived from published information of the proponents
Data supplied privately prior to publication

Vergleich der US-Vorschläge bei ATTC (Advanced Television Test Center)
aus "1125 / 60 High Definition Origination.
In The Era of Conversion to Advanced Television", S.7.
Washington, CD 20036 1625 LSt.NW

FIG. 18

EP 0 591 643 B1

| Kanal-Datenrate (Mbit/s) | n COFDM-Pakete | | TV-Kanäle (Bandbreite) | Bemerkungen |
|---|---|---|---|---|
| | 4PSK | 8PSK/2AM | | |
| 1 x 2,4 | 1 | | 1/4 | Standard DAB |
| 4 x 2,4 | 4 | | 1 | z. B. für VADIS mit 10 Mbit/s (entsprechender Standard für Zuführung) |
| 8 x 2,4 | 8 | | 2 | z. B. HDTV - DIG (US-Vorschläge) |
| 2 x 2,4 | | 1 | 1/4 | |
| 8 x 2,4 | | 4 | 1 | z. B. HdTV - DIG (US-Vorschläge) |
| 16 x 2,4 | | 8 | 2 | Ges. 38,4 Mbit/s z. B. HDTV - DIG mit 34 Mbit/s (EU-Vorschlag) |
| 0,381 | $\frac{204}{1536}$ | | (200 kHz) | Schmalband - 4PSK |
| 0,762 | | $\frac{204}{1536}$ | (200 kHz) | Schmalband - 8PSK/2AM |

FIG. 19

EP 0 591 643 B1

$$B_{HF} \approx 1,3 \cdot f_{Bit}$$

$$B_{HF} \approx 0,65 \cdot f_{Bit} \qquad \text{bei 4-PSK}$$

Leistungsverdichteverteilung und Bandbreitebedarf
bei 2-PSK und bei 4-PSK $(f_{Bit} \rightarrow f_{Schritt} \; \frac{1}{2} \cdot f_{Bit})$

$$T_{Bit} = \frac{1}{20,48 \text{ Mbit/s}} \cong 50 \text{ ns}$$

$$B_{HF} \approx 0,65 \, f_{Bit/4PSK} \approx 0,65 \cdot \frac{1}{50ns} = 13 \text{ MHz}$$

aus Mäusl "Digitale Modulationsverfahren" Hüthig Verlag

FIG. 20

DSR1  DSR2

|← 27MHz →|

Fig. 21a

1/2DSR2  DSR1  1/2DSR2

|← 27MHz →|

Fig. 21b

FIG. 21

EP 0 591 643 B1

Fig. 22

EP 0 591 643 B1

FIG. 23

ΔF =
eg 6,75 MHz

B =
eg 2 MHz

TR1

27 MHz

TRn

eg n = 4
(with N = 6, B = 4,5 MHz)

Down LINK

DL/IF

4PSK DEMOD.

A'$_E$

B'$_E$

SDSR DECOD.

3

CH

COFDM MOD.

BB

DAB-Tx

Fig. 4

SFN

FIG. 24

EP 0 591 643 B1

Fig. 25: Adaption der 16 QAM auf DAB-Prinzip

10,24 Mbit/s

10,24 Mbit/s

4PSK-DSR

10,24 Mbit/s

10,24 Mbit/s

4PSK-DSR

6 dB

+

2 x DSR

16 QAM

B = 13 MHz

Datenrate 40,96 Mbit/s

Modulationspunkt

Fig. 26: Adaption der 16 QAM auf DSR-Prinzip

8PSK/2AM

16QAM

Fig. 27: Vergleich der "Entscheidungskreise"
bei 8PSK/2AM und 16QAM

DSR (Eing. 1,3)
6 x 10,24 MHz

DAB (Eing. 2)
3 x 2,4 Mbit/s

DSR
61,44 Mbit/s

DAB
7,2 Mbit/s

Modulationspunkt

Fig. 28: Adaption der 64-QAM
auf DSR- und DAB-Prinzip